Europäisches Patentamt

European Patent Office

Office européen des brevets

(19)

(11) **EP 1 040 171 B1**

(12) **FASCICULE DE BREVET EUROPEEN**

(45) Date de publication et mention
de la délivrance du brevet:
**02.11.2005 Bulletin 2005/44**

(21) Numéro de dépôt: **98962136.2**

(22) Date de dépôt: **16.12.1998**

(51) Int Cl.⁷: **C09D 167/00**, C09D 5/03

(86) Numéro de dépôt international:
**PCT/BE1998/000200**

(87) Numéro de publication internationale:
**WO 1999/032567 (01.07.1999 Gazette 1999/26)**

(54) **COMPOSITIONS THERMODURCISSABLES EN POUDRE POUR LA PREPARATION DE REVTEMENTS DE FAIBLE BRILLANT**

WÄRMEHÄRTENDE PULVERZUSAMMENSETZUNGEN ZUR HERSTELLUNG VON ÜBERZÜGEN MIT SCHWACHEM GLANZ

POWDER THERMOSETTING COMPOSITIONS FOR PREPARING COATINGS WITH LOW GLOSS FINISH

(84) Etats contractants désignés:
**AT BE CH CY DE DK ES FI FR GB GR IE IT LI LU MC NL PT SE**

(30) Priorité: **18.12.1997 BE 9701039**

(43) Date de publication de la demande:
**04.10.2000 Bulletin 2000/40**

(73) Titulaire: **CYTEC SURFACE SPECIALTIES, S.A.
1070 Bruxelles (BE)**

(72) Inventeurs:
• **MOENS, Luc
B-1640 Sint-Genesius-Rode (BE)**
• **BUYSENS, Kris
B-9700 Oudenaarde (BE)**
• **MAETENS, Daniel
B-1082 Bruxelles (BE)**

(74) Mandataire: **Destryker, Elise Martine et al
UCB, S.A.,
IPD,
Allée de la Recherche, 60
1070 Bruxelles (BE)**

(56) Documents cités:
**WO-A-91/14745          WO-A-94/02552
WO-A-97/20895           US-A- 5 264 529**

**Description**

La présente invention se rapporte à des compositions thermodurcissables en poudre comprenant comme liant un mélange d'un polyester amorphe, d'un polyester semi-cristallin et d'un agent de réticulation, qui fournissent par cuisson des revêtements de faible brillant, en particulier des revêtements mats.

L'invention se rapporte également à l'utilisation des ces compositions pour la préparation de peintures et vernis en poudre fournissant des revêtements de faible brillant, de même qu'aux revêtements de faible brillant obtenus à partir de ces compositions.

A l'heure actuelle, les compositions de revêtement thermodurcissables en poudre sont largement employées comme peintures et vernis pour former des revêtements protecteurs durables sur les objets les plus divers. Les compositions de revêtement en poudre possèdent de nombreux avantages par rapport aux compositions de revêtement se présentant sous la forme de solutions dans un solvant organique; d'une part, les problèmes de sécurité et d'environnement causés par les solvants sont complètement supprimés, d'autre part, alors que les compositions de revêtement à base de solvants ont l'inconvénient de ne pouvoir être utilisées que partiellement - dans certains types d'application 60% seulement ou moins de la composition de revêtement appliquée vient en contact avec le substrat et cette partie qui ne vient pas en contact avec le substrat n'est pas récupérable - les compositions de revêtement en poudre sont utilisées à 100%, vu que seule la poudre en contact direct avec le substrat est retenue par celui-ci, l'excès de poudre étant, en principe, intégralement récupérable et réutilisable. C'est pourquoi ces compositions en poudre sont préférées par rapport aux compositions de revêtement se présentant sous la forme de solutions dans un solvant organique.

Les compositions de revêtement en poudre contiennent généralement un liant organique thermodurcissable et éventuellement des charges, des pigments, des catalyseurs et des additifs divers pour adapter leur comportement à leur utilisation.

La préparation de ces poudres thermodurcissables se fait de la manière suivante. On mélange à sec à la température ambiante le ou les polyesters, l'agent de réticulation, le catalyseur éventuel, les pigments, les charges et autres additifs dans les proportions requises pour obtenir une peinture ou vernis en poudre. On fait passer le mélange ainsi obtenu dans une extrudeuse pour y produire une homogénéisation en phase fondue à une température généralement comprise entre 80 et 150°C. On laisse refroidir le mélange sortant de l'extrudeuse, on le broie et on le tamise pour obtenir une poudre ayant la granulométrie désirée comprise entre 10 et 150 micromètres.

Les peintures et vernis en poudre ainsi obtenus sont appliqués de manière connue en soi au moyen d'un pistolet pulvérisateur électrostatique ou triboélectrique ou par la technique du dépôt en lit fluidisé sur l'objet à revêtir. L'objet ainsi revêtu est ensuite chauffé dans un four où est réalisé la fusion et la réticulation à température élevée du liant.

Les revêtements durcis obtenus à partir des compositions de revêtement thermodurcissables en poudre doivent présenter un aspect lisse, uniforme, sans défauts et surtout exempts de "peau d'orange"; ils doivent posséder de bonnes propriétés mécaniques et chimiques et une bonne résistance aux intempéries.

En outre, il est essentiel que les compositions de revêtement en poudre restent sous la forme de poudres s'écoulant librement pendant une période suffisante après leur fabrication et leur conditionnement, sans se réagglomérer pendant le transport et le stockage.

Les compositions de revêtement thermodurcissables en poudre couramment utilisées et disponibles dans le commerce contiennent comme liant un mélange d'un polyester amorphe contenant des groupes carboxyle ou hydroxyle ayant une température de transition vitreuse (Tg) comprise entre 45 et 80°C avec un agent de réticulation ayant des groupes fonctionnels susceptibles de réagir avec les groupes carboxyle ou hydroxyle du polyester.

Les polyesters amorphes utilisés dans ces compositions sont ceux obtenus à partir d'acides dicarboxyliques aromatiques tels que l'acide téréphtalique ou l'acide isophtalique et éventuellement d'acides dicarboxyliques aliphatiques tels que l'acide adipique et de différents polyols tels que le néopentylglycol, l'éthylène glycol, le triméthylolpropane, etc.

Ces compositions à base de polyester amorphes sont stables au stockage et produisent des revêtements d'excellente qualité, entre autres une surface sans défauts apparents et de bonnes propriétés mécaniques. Parmi ces compositions, les compositions à base de polyesters amorphes riches en acide isophtalique fournissent des revêtements qui sont très prisés pour leur excellente performance en exposition à l'extérieur.

Toutefois, ces compositions à base de polyesters amorphes fournissent après cuisson des revêtements présentant un brillant très élevé. La brillance, mesurée sous un angle de 60°, selon la norme ASTM D 523, est très souvent supérieure à 90%.

On a également déjà proposé des compositions de revêtement en poudre dont le liant contient un polyester semi-cristallin.

Ainsi, dans le brevet européen 521 992, le liant proposé est constitué par un mélange d'au moins un polyester semi-cristallin ayant un indice d'acide de 10 à 70 mg de KOH par gramme et d'au moins un polyester amorphe ayant une température de transition vitreuse (Tg) d'au moins 30°C et un indice d'acide de 15 à 90 mg de KOH par gramme, avec un agent de réticulation, qui peut être un composé époxydé, un composé contenant des groupes hydroxyle ou thiole activé ou une oxazoline.

Les polyesters semi-cristallins sont caractérisés par une ou plusieurs températures de transition vitreuse (Tg) ne dépassant pas 55°C et un point de fusion net de 50 à 200°C.

Selon ce brevet, les polyesters semi-cristallins diffèrent des polyesters amorphes par le fait que les polyesters semi-cristallins ont une morphologie hétérogène (ils renferment un mélange de phases), sont opaques et de couleur blanche à la température ambiante, présentent une faible viscosité à l'état de fusion, sont plus insolubles dans les solvants organiques et présentent une très grande régularité de structure. Les polyesters semi-cristallins décrits et utilisés dans les exemples de réalisation de ce brevet sont ceux obtenus par polycondensation à partir d'acides dicarboxyliques renfermant un cycle aromatique ou aliphatique comme l'acide téréphtalique et l'acide 1,4-cyclohexanedicarboxylique et à partir de diols aliphatiques saturés à chaîne linéaire tels que le 1,6-hexanediol et le 1,10-décanediol; on y adjoint en outre des acides dicarboxyliques aliphatiques à chaîne linéaire tels que l'acide adipique, l'acide succinique ou l'acide 1,12-dodécanedioïque. Les polyesters amorphes utilisés sont les polyesters contenant des groupes carboxyle employés couramment dans les peintures et vernis en poudre; ces polyesters peuvent être riches en acide isophtalique en vue d'obtenir des revêtements destinés à l'extérieur ayant une bonne résistance aux intempéries.

D'après ce brevet, la présence du polyester semi-cristallin dans le liant procure un revêtement ayant un excellent aspect global, exempt de "peau d'orange" et des propriétés mécaniques améliorées.

Cependant, comme la montre le tableau I à la fin de la description de ce brevet, les revêtements obtenus à partir de ces compositions présentent tous un brillant très élevé; la brillance, mesurée sous un angle de 60°, selon la norme ASTM D 523, peut varier entre 82 et 87%.

Dans le brevet américain 5.373.084, on propose des compositions de revêtement thermodurcissables en poudre comprenant comme liant un mélange d'un polyester semi-cristallin particulier, d'un polyester amorphe et d'un agent de réticulation. Les polyesters semi-cristallins particuliers proposés dans ce brevet sont ceux obtenus par estérification d'un acide dicarboxylique aliphatique saturé à chaîne linéaire, principalement l'acide 1,12-dodécanedioïque, avec un diol aliphatique saturé à chaîne linéaire, principalement le 1,6-hexanediol, et en incorporant éventuellement un polyol trifonctionnel comme le triméthylolpropane ou le glycérol ou un acide polycarboxylique trifonctionnel tel que l'acide trimellitique pour obtenir des polyesters ramifiés. Ces polyesters semi-cristallins ont un indice d'acide ou d'hydroxyle d'environ 20 à 120, de préférence d'environ 30 à 80 mg de KOH par gramme et un point de fusion de 40 à 200°C, de préférence de 60 à 150°C. Les polyesters amorphes utilisés sont les polyesters amorphes contenant des groupes hydroxyle ou carboxyle conventionnels; ces polyesters ont de préférence une température de transition vitreuse (Tg) d'au moins 50°C et un indice d'hydroxyle ou d'acide d'environ 25 à 80 mg de KOH par gramme. On notera cependant que les seuls polyesters amorphes décrits et utilisés dans ce brevet sont des polyesters amorphes riches en acide téréphtalique, dont le constituant acide contient au moins 50 moles % d'acide téréphtalique et dont le constituant alcoolique contient au moins 50 moles % de néopentylglycol et jusqu'à 10 moles % de triméthylolpropane; par contre, des polyesters amorphes riches en acide isophtalique ne sont pas mentionnés dans ce brevet.

Les polyesters semi-cristallins particuliers proposés dans ce brevet agissent surtout comme plastifiants réactifs. Dans les exemples de réalisation on montre que lorsque la composition en poudre contient une faible quantité du polyester semi-cristallin plastifiant (au plus 10% en poids calculée par rapport au poids total des polyesters amorphe et semi-cristallin) la composition fournit des revêtements ayant des propriétés améliorées, en l'occurrence un aspect lisse et avec peu de "peau d'orange", une brillance mesurée sous un angle de 60°, selon la norme ASTM D 523 de 96 à 97%, une bonne dureté au crayon et d'excellentes propriétés mécaniques. Toutefois, tout comme le brevet européen 521.992 cité précédemment, le brevet américain 5.373.084 ne révèle pas la possibilité d'obtenir des revêtements présentant un faible brillant, par exemple des revêtements dont la brillance mesurée sous un angle de 60°, selon la norme ASTM D 523 serait inférieure à 50%.

La demande de brevet internationale WO 97/20895 concerne des compositions thermodurcissables en poudre comprenant un polyester amorphe contenant des groupes carboxyle et un polyester semi-cristallin contenant des groupes carboxyle.

Le polyester amorphe est constitué, par rapport au total des acides, de 70 à 100 moles% d'acide isophtalique et de 0 à 30 moles% d'au moins un autre acide polycarboxylique aliphatique et/ou cycloaliphatique et/ou aromatique, et, par rapport au total des alcools, de 70 à 100 moles% de néopentylglycol et/ou de 2-butyl-2-éthyl-1,3-propanediol et de 0 à 30 moles% d'au moins un autre polyol aliphatique et/ou cycloaliphatique.

Le polyester semi-cristallin est constitué, par rapport au total des alcools, de 85 à 100 moles% de 1,4-cyclohexanediol et de 0 à 15 moles% d'au moins un autre polyol aliphatique et/ou cycloaliphatique, et par rapport au total des acides, de 85 à 100 moles% d'un acide aliphatique dicarboxylique saturé à chaîne linéaire ayant de 4 à 14 atomes de carbone et de 0 à 15 moles% d'au moins un autre acide polycarboxylique aliphatique, et/ou cycloaliphatique et/ou aromatique.

Ces compositions fournissent des revêtements dont la résistance aux intempéries est remarquable, les propriétés mécaniques excellentes mais dont le brillant est élevé (de 85 à 98 % à 60°, selon la norme ASTM D523).

Or, il existe de plus en plus un besoin de pouvoir disposer de peintures et vernis en poudre thermodurcissables qui fournissent des revêtements présentant un faible brillant comme par exemple des revêtements satinés ou semi-brillants ou des revêtements mats, utilisables entre autres pour le revêtement de certains accessoires de l'industrie automobile tels que des jantes de roues, des pare-chocs, etc. ou encore pour le revêtement de panneaux et poutres métalliques utilisés dans la construction.

On a déjà proposé différentes méthodes pour obtenir des peintures et vernis en poudre fournissant des revêtements présentant un faible brillant. Cependant l'expérience a montré qu'il est difficile de réaliser une peinture ou un vernis capable de fournir, dans les conditions usuelles d'extrusion et de cuisson, une finition mate ou satinée de manière tout à fait fiable et reproductible. Selon l'une de ces méthodes, on introduit dans la composition de la poudre, en plus du liant et des pigments conventionnels, un ou plusieurs agent(s) de matité particuliers tels que de la silice, du talc, de la craie et des sels métalliques. Toutefois, la réduction du brillant est souvent insuffisante et l'on constate une altération marquée des propriétés des enduits de peinture, comme par exemple un manque d'adhérence sur le substrat métallique. Pour remédier à ces inconvénients, on propose dans le brevet européen 165.207, d'incorporer des cires, par exemple une cire de polyoléfine et des sels métalliques (par exemple le 2-benzothiazolethiolate de zinc) dans des compositions thermodurcissables en poudre à base de polyesters terminés par des groupes carboxyle et de composés époxydés tels que l'isocyanurate de triglycidyle. De même, dans le brevet américain 4.242.253. on propose comme additifs, du carbonate de calcium et des particules de polypropylène finement divisées pour réaliser des revêtements de faible brillant. L'inconvénient de ce système est que les charges inorganiques, souvent incorporées en quantités importantes, peuvent endommager les extrudeuses utilisées dans la préparation des poudres et nuisent à l'aspect de surface recherché du revêtement obtenu, qui présente souvent un aspect rugueux et irrégulier. Par ailleurs, les cires ajoutées migrent facilement vers la surface, ce qui provoque des variations inacceptables du degré de matité du revêtement au cours de son vieillissement naturel. En outre, le fait de devoir ajouter des charges complémentaires en grandes quantités entraine une dépense supplémentaire et constitue en soi un inconvénient.

Selon le brevet américain 3.842.035, il est connu de réaliser une finition mate en utilisant une composition de revêtement obtenue par mélange à sec de deux compositions thermodurcissables en poudre qui ont été extrudées séparément. Une de celles-ci est une composition durcissant lentement (temps de gel long) et l'autre une composition durcissant rapidement (temps de gel court). Par ce système, il est possible d'obtenir après cuisson un revêtement mat sans qu'il soit nécessaire d'ajouter un agent de matité particulier à la composition en poudre. L'inconvénient majeur de ce système est de nécessiter le mélange à sec de grandes quantités de poudres déjà formulées, ce qui n'est pas facile à réaliser, surtout à l'échelle industrielle. De plus, comme ce mélange ne peut pas se faire de manière continue, mais seulement par lots de poudre, il n'est pas facile d'obtenir le même degré de matité pour les revêtements en passant d'un lot de poudre à l'autre. Enfin, la poudre qui est récupérée après une première pulvérisation et réutilisée comme peinture peut ne pas avoir la même composition que la poudre avait lors de la première pulvérisation, ce qui entraine également une évolution dans le degré de matité obtenu.

Il existe encore d'autres systèmes destinés à obtenir des revêtements mats dans lesquels on se sert de deux polymères de nature ou de réactivité différente, ainsi que d'un ou plusieurs agents de réticulation, de manière à induire deux mécanismes de réticulation distincts, ou deux vitesses de réaction très différentes. Dans ces systèmes, la préparation de la poudre est effectuée en une seule étape à la différence du procédé décrit dans le brevet américain 3.842.035. Il est alors possible de produire en une seule extrusion une peinture ou un vernis en poudre capable de former des revêtements de très faible brillant.

A titre d'exemple, dans la demande de brevet japonais 154.771/88 on décrit une composition de résine pour peinture mate pulvérulente comprenant un mélange d'un polyester ramifié contenant des groupes hydroxyle ayant un indice d'hydroxyle élevé avec un autre polyester contenant des groupes hydroxyle ayant un indice d'hydroxyle plus faible, dans des proportions déterminées, et un isocyanate bloqué comme agent de réticulation. Cette composition fournit un revêtement mat possédant de bonnes propriétés mécaniques et une bonne résistance aux intempéries. Dans la demande de brevet international WO 92/01756 on décrit des compositions de revêtement en poudre comprenant un mélange renfermant à la fois (1) un polyester semi-cristallin contenant des groupes hydroxyle ayant un indice d'hydroxyle de 20 à 100, (2) un polyester amorphe contenant des groupes hydroxyle ayant un indice d'hydroxyle de 20 à 120. (3) un polymère acrylique contenant des groupes hydroxyle et (4) un polyisocyanate bloqué comme agent de réticulation. Les polyesters semi-cristallins utilisés sont ceux dont le constituant acide contient de 85 à 95 moles % d'acide téréphtalique et de 5 à 15 moles % d'acide 1,4-cyclohexanedicarboxylique et dont le constituant alcoolique contient un diol aliphatique à chaîne linéaire.

A partir de ces compositions, on obtient des revêtements de faible brillant (la brillance, mesurée sous un angle de 60°, selon la norme ASTM D 523, n'excède pas 35%), ayant de bonnes propriétés mécaniques et une bonne dureté au crayon. Dans la demande de brevet européen 366.608, on décrit des peintures en poudre obtenues en une extrusion et fournissant des revêtements mats, mais celles-ci renferment deux agents de réticulation. Ces peintures en poudre contiennent une résine époxy, en particulier du diglycidyléther de bisphénol A, un acide polycarboxylique, comme par exemple la 2,2,5,5-tétra(β-carboxyéthyl)-cyclopentanone comme premier agent de réticulation, et un polyester saturé terminé par des groupes carboxyle, le tolylbiguanide ou le dicyandiamide en tant que deuxième agent de réticulation.

Enfin, l'utilisation de composés actifs dans deux systèmes de réaction différents pour la production de revêtements mats est décrite par exemple dans le brevet européen 104.424. On propose dans ce brevet la préparation d'une poudre en ne mettant en oeuvre qu'une seule extrusion. Cette poudre contient comme liant à la fois une résine contenant des groupes hydroxyle telle qu'un polyester contenant des groupes hydroxyle et un composé polyépoxydé tel que l'isocyanurate de triglycydyle et elle renferme un agent de réticulation particulier qui comporte dans sa molécule à la fois des groupes carboxyle (pour réagir avec le composé époxydé) et des groupes isocyanate bloqué (pour réagir avec la résine contenant des groupes hydroxyle).

Le principal désavantage des peintures et vernis en poudre obtenus en une extrusion décrits dans les brevets cités précédemment est que les propriétés des poudres obtenues sont très sensibles aux variations des conditions d'extrusion, comme la température d'extrusion, le gradient de cisaillement, etc., et comme le réglage précis de ces conditions n'est pas aisé, il est difficile de produire constamment des revêtements ayant le même degré de matité à partir d'une composition bien définie. En particulier, le problème est de trouver une composition qui produit dans les conditions usuelles d'extrusion un revêtement de faible brillant de manière tout à fait fiable et reproductible.

Dans le brevet européen 551.064, on propose de résoudre ce problème en utilisant des compositions de revêtement thermodurcissables en poudre qui contiennent comme liant un mélange d'un polyester linéaire contenant des groupes carboxyle ayant un indice d'acide compris entre 20 et 50 mg de KOH par gramme et d'un copolymère acrylique-contenant des groupes glycidyle obtenu à partir de 5 à 30% en poids d'acrylate ou méthacrylate de glycidyle et de 70 à 95% en poids de méthacrylate de méthyle. Ces compositions en poudre permettent d'obtenir des revêtements de bonne qualité présentant un très faible brillant. En effet, la brillance, mesurée sous un angle de 60°, selon la norme ASTM D 523 est toujours inférieure à 15%. En outre, ces revêtements mats présentent une surface lisse sans défauts, une bonne adhérence sur les surfaces métalliques et une excellente résistance aux intempéries. De plus, les propriétés de ces poudres ne sont que peu ou pas sensibles aux variations des conditions d'extrusion, ce qui fait qu'une composition déterminée produit pratiquement toujours un revêtement mat ayant sensiblement le même degré de matité.

Cependant, il s'est avéré que les revêtements mats obtenus à partir de ces compositions ne supportent pas les déformations mécaniques, vu que les propriétés mécaniques de ces revêtements sont insuffisantes, en particulier la résistance aux chocs direct et inverse.

En conclusion, on voit que les différentes compositions en poudre proposées à ce jour pour l'obtention de revêtements de faible brillant présentent toutes encore un certain nombre d'inconvénients.

Il subsiste donc un besoin de disposer de compositions thermodurcissables en poudre capable de produire des revêtements de faible brillant ne présentant pas les défauts des compositions de l'état de la technique.

Conformément à la présente invention, on a fait le découverte surprenante qu'en utilisant comme liant un mélange d'un polyester amorphe contenant des groupes carboxyle, riche en acide isophtalique, avec un polyester semi-cristallin contenant des groupes carboxyle préparé plus particulièrement à partir d'un acide dicarboxylique aliphatique saturé à chaîne linéaire et d'un diol aliphatique saturé à chaîne linéaire ou cyclique et un agent de réticulation approprié, il est possible d'obtenir des compositions thermodurcissables en poudre capable de produire des revêtements de faible brillant de manière tout à fait fiable et reproductible et qui possèdent de bonnes propriétés mécaniques et une excellente résistance aux intempéries.

La présente invention a donc pour objet des compositions de revêtement thermodurcissables en poudre comprenant comme liant un mélange d'un polyester amorphe, d'un polyester semi-cristallin et d'un agent de réticulation qui sont caractérisées en ce que le liant comprend

(a) un polyester amorphe contenant des groupes carboxyle, riche en acide isophtalique, préparé à partir d'un constituant acide comprenant de 55 à 100 moles % d'acide isophtalique, de 0 à 45 moles % d'au moins un acide dicarboxylique autre que l'acide isophtalique et de 0 à 10 moles % d'un acide polycarboxylique contenant au moins 3 groupes carboxyle et d'un constituant alcoolique comprenant de 60 à 100 moles % de néopentylglycol, de 0 à 40 moles % d'au moins un composé dihydroxylé autre que le néopentylglycol et de 0 à 10 moles % d'un composé polyhydroxylé contenant au moins 3 groupes hydroxyle, ledit polyester amorphe ayant une température de transition vitreuse (Tg) d'au moins 50°C et un indice d'acide de 15 à 100 mg de KOH/g,

(b) un polyester semi-cristallin contenant des groupes carboxyle préparé soit

(b1) à partir d'un acide dicarboxylique aliphatique saturé à chaîne linéaire ayant de 4 à 16 atomes de carbone et d'un diol aliphatique saturé à chaîne linéaire ayant de 2 à 16 atomes de carbone et éventuellement d'un acide polycarboxylique contenant au moins 3 groupes carboxyle ou d'un polyol contenant au moins 3 groupes hydroxyle, soit

(b2) à partir de 40 à 100 moles % d'un acide dicarboxylique aliphatique saturé à chaîne linéaire choisi parmi l'acide 1,11-undécanedioïque, l'acide 1,12-dodécamedioïque, l'acide 1,13-tridécanedioïque, l'acide 1,15-pentadécanedioïque et l'acide 1, 16-hexadécanedioïque et de 0 à 60 moles % d'un acide dicarboxylique aliphatique sature à chaîne linéaire ayant de 4 à 9 atomes de carbone, calculé sur le total des acides dicarboxyliques, d'un diol cycloaliphatique ayant de 3 à 16 atomes de carbone et éventuellement d'un acide polycarboxylique ayant au moins 3 groupes carboxyle ou d'un polyol ayant au moins 3 groupes hydroxyle, soit

(b3) à partir de 40 à 100 moles % d'acide 1,14-tétradécanedioïque et de 0 à 60 moles % d'un acide dicarboxylique aliphatique à chaîne linéaire ayant de 4 à 9 atomes de carbone, calculé sur le total des acides dicarboxyliques, de cyclohexanediméthanol et éventuellement d'un acide polycarboxylique ayant au moins 3 groupes carboxyle ou d'un polyol ayant au moins 3 groupes hydroxyle,

lesdits polyesters semi-cristallins ayant un point de fusion (Tm) d'au moins 40°C et un indice d'acide de 5 à 50 mg de KOH/g, et

(c) un agent de réticulation.

Les polyesters amorphes contenant des groupes carboxyle, riches en acide isophtalique, utilisés dans les compositions conformes à l'invention, sont des polyesters ayant une teneur élevée en acide isophtalique couramment utilisés dans les formulations de peintures et vernis en poudre pour la réalisation de revêtements offrant d'excellentes performances en exposition à l'extérieur.

Selon l'invention, le constituant acide de ces polyesters amorphes riches en acide isophtalique doit renfermer au moins 55 moles % d'acide isophtalique et il peut même être constitué totalement d'acide isophtalique (100 moles %).

Le constituant acide de ces polyesters amorphes peut contenir en outre jusqu'à 45 moles % d'un acide dicarboxylique aromatique, aliphatique ou cycloaliphatique différent de l'acide isophtalique, tel que l'acide téréphtalique, l'acide phtalique, l'acide succinique, l'acide glutarique, l'acide adipique, l'acide pimélique, l'acide subérique, l'acide azélaïque, l'acide sébacique, l'acide fumarique, l'acide maléique, l'acide 1,3- et 1,4-cyclohexanedicarboxylique et les mélanges de ces composés et jusqu'à 10 moles % d'un acide polycarboxylique contenant au moins 3 groupes carboxyle, tel que l'acide trimellitique et l'acide pyromellitique. Ces acides peuvent être utilisés sous la forme de l'acide libre, ou le cas échéant, sous la forme de l'anhydride, ou encore sous la forme d'un ester avec un alcool aliphatique inférieur.

Le constituant alcoolique de ces polyesters amorphes doit renfermer au moins 60 moles % de néopentylglycol, il peut même être constitué entièrement de néopentylglycol (100 moles %). Le constituant alcoolique de ces polyesters amorphes peut contenir en outre jusqu'à 40 moles % d'un composé dihydroxylé aliphatique, cycloaliphatique ou aromatique différent du néopentylglycol tel que l'éthylène glycol, le propylène glycol, le 1,4-butanediol, le 1,6-hexanediol, le 2-méthyl-1,3-propanediol, le 2-butyl-2-éthyl-1,3-propanediol, le 1,4-cyclohexanediméthanol, le bisphénol A hydrogéné, l'hydroxypivalate de néopentylglycol et les mélanges de ces composés et jusqu'à 10 moles % d'un composé polyhydroxylé contenant au moins 3 groupes hydroxyle tel que le triméthylolpropane, le di-triméthylolpropane, le pentaérythritol et leurs mélanges.

Les polyesters amorphes contenant des groupes carboxyle, riches en acide isophtalique, qui peuvent être utilisés conformément à l'invention ont un indice d'acide de 15 à 100 mg de KOH par gramme, de préférence de 30 à 70 mg de KOH par gramme et présentent une température de transition vitreuse (Tg) qui s'élève à au moins 50°C pour que les polyesters restent solides à la température d'entreposage (20 à 50°C) et qui varie de préférence de 50 à 80°C. Le poids moléculaire moyen en nombre ($\overline{M}n$) de ces polyesters amorphes est compris entre 1.100 et 11.500 et de préférence entre 1.600 et 8.500. La viscosité à l'état fondu (mesurée au viscosimètre cône/plateau selon la norme ASTM D 4287-88) de ces polyesters amorphes peut varier de 100 à 15.000 mPa.s à 200°C.

Les polyesters semi-cristallins contenant des groupes carboxyle utilisés dans les compositions conformes à l'invention sont des polyesters semi-cristallins ayant une constitution chimique particulière.

Les polyesters (b1) sont préparés par polyestérification d'un acide dicarboxylique aliphatique saturé à chaîne linéaire ayant de 4 à 16 atomes de carbone avec un diol aliphatique saturé ayant de 2 à 16 atomes de carbone. De préférence, ces polyesters sont linéaires, mais on peut également utiliser des polyesters ramifiés dans lesquels la ramification est introduite au moyen d'un acide polycarboxylique contenant au moins 3 groupes carboxyle tel que l'acide trimellitique ou pyromellitique ou d'un polyol tel que le triméthylolpropane, le di-triméthylolpropane et le pentaérythritol, ces composés étant utilisés à raison de 0 à 10 moles % sur l'ensemble des monomères.

Des exemples d'acides dicarboxyliques aliphatiques saturés à chaîne linéaire qui peuvent être utilisés sont l'acide succinique, l'acide glutarique, l'acide pimélique, l'acide subérique, l'acide azélaïque, l'acide sébacique et l'acide 1,12-dodécanedioïque. Ces acides peuvent être utilisés en mélange, mais ils sont utilisés de préférence seuls. L'acide 1,12-dodécanedioïque reçoit la préférence. Des exemples de diols aliphatiques saturés à chaîne linéaire qui peuvent être utilisés sont l'éthylène glycol, le 1,3-propanediol, le 1,4-butanediol, le 1.5-pentanediol, le 1,6-hexanediol, le 1,7-heptanediol, le 1,8-octanediol, le 1,9-nonanediol, le 1,10-decanediol, le 1,12-dodécanediol, le 1,14-tétradécanediol et le 1.16-hexadécanediol. Ces diols peuvent être utilisés en mélange, mais ils sont utilisés de préférence seuls. Le 1.6-hexanediol est utilisé de préférence.

Les polyesters semi-cristallins (b2) sont préparés à partir de 40 à 100 moles % d'un acide dicarboxylique aliphatique saturé à chaîne linéaire choisi parmi l'acide 1.11-undécanedioïque, l'acide 1,12-dodécanedioïque, l'acide 1,13-tridécanedioïque, l'acide 1,15-péntadécanedioïque et l'acide 1,16-hexadécanedioïque et de 0 à 60 moles % d'un acide dicarboxylique aliphatique saturé à chaîne linéaire ayant de 4 à 9 atomes de carbone, calculé sur l'ensemble de ces acides dicarboxylique. Il est également possible d'utiliser de 40 à 95 moles % de l'acide ayant de 10 à 16 atomes de carbone et de 5 à 60 moles % de l'acide ayant de 4 à 9 atomes de carbone. Le constituant alcoolique de ces polyesters est un diol cycloaliphatique ayant de 3 à 16 atomes de carbone. De préférence, ces polyesters sont linéaires, mais on peut également utiliser des polyesters ramifiés dans lesquels la ramification est introduite au moyen d'un acide polycarboxylique contenant au moine 3 groupes carboxyle tel que l'acide trimellitique ou pyromellitique ou d'un polyol tel que le triméthylolpropane, le di-triméthylolpropane et le pentaérythritol. Ces composés ayant au moins 3 fonctions sont utilisés à raison de 0 à 10 moles % sur l'ensemble des monomères entrant dans la composition du polyester.

Des exemples d'acides dicarboxyliques aliphatiques saturés à chaîne linéaire sont l'acide 1,10-décanedioïque, l'acide 1,11-undêcanedioïque, l'acide 1,12-dodécanedioïque, l'acide 1,13-tridécanedioïque, l'acide 1,15-pentadécanedioïque et l'acide 1,16-hexadécanedioïque. L'acide 1,12-dodécanedioïque est utilisé de préférence, seul ou en mélange.

Des exemples d'acides dicarboxyliques aliphatiques saturés à chaîne linéaire ayant de 4 à 9 atomes de carbone qui peuvent être utilisés sont l'acide succinique, l'acide glutarique, l'acide pimélique, l'acide subêrique, l'acide azélaïque. Ces acides peuvent être utilisés en mélange mais ils sont utilisés de préférence seuls. Des exemples de diols cycloaliphatiques ayant de 3 à 16 atomes de carbone qui peuvent être utilisés sont le 1.4-cyclohexanediol, le 1,4-cyclohexanediméthanol, le bisphénol A hydrogéné, le 2,2,4,4-tétraméthyl-1,3-cyclobutanediol et le 4,8-bis(hydroxyméthyl)tricyclo[5.2.1.0$^{2,5}$]décane.

Ces diols peuvent être utilsés en mélange, mais ils sont utilisés de préférence seuls. De préférence, on utilise le 1,4-cyclohexanediol ou le cyclohexanediméthanol.

Les polyesters semi-cristallins contenant des groupes carboxyle qui peuvent être utilisés conformément à l'invention ont un indice d'acide de 5 à 50 mg de KOH par gramme, de préférence de 5 à 30 mg de KOH par gramme: de préférence, ces polyesters ont un indice d'hydroxyle qui ne dépasse pas 5 mg de KOH par gramme.

Ces polyesters semi-cristallins sont des produits solides à la température ambiante caractérisés par un point de fusion (Tm) compris entre 40 et 90°C.

Le poids moléculaire moyen en nombre ($\overline{M}$n) de ces polyesters semi-cristallins est compris entre 2.200 et 25.000 et de préférence entre 2.800 et 11.220. La viscosité à l'état fondu (mesuré au viscosimètre cône/plateau selon la norme ASTM D 4287-88) de ces polyesters semi-cristallins peut varier de 50 mPa.s à 100°C à 10.000 mPa.s à 150°C.

On a constaté avec surprise que seules les compositions thermodurcissables en poudre contenant à la fois un polyester amorphe riche en acide isophtalique et un polyester semi-cristallin particulier préparé par polyesterification d'un acide dicarboxylique aliphatique saturé à chaîne linéaire avec un diol aliphatique saturé à chaîne linéaire ou cycloaliphatique, tels que décrits ci-dessus en détail, sont capables de fournir des revêtements de faible brillant ou mats présentant de bonnes propriétés mécaniques et une excellente résistance aux intempéries. En effet on a observé que des poudres de composition identique, mais dans lesquelles le polyester amorphe riche en acide isophtalique est remplacé par un polyester amorphe riche en acide téréphtalique du type de ceux décrits et utilisés dans le brevet américain 5.373.084 donnent après cuisson un revêtement présentant un brillant très élevé (exemple comparatif I). De même, on a observé que des poudres de composition identique, mais dans lesquelles le polyester semi-cristallin particulier conforme à l'invention est remplacé par un polyester semi-cristallin non conforme à l'invention du type de ceux décrits et utilisés dans le brevet européen 521.992 et basé essentiellement sur l'acide téréphtalique et le 1,6-hexanediol, donnent après cuisson aussi un revêtement présentant un brillant très élevé (exemples comparatifs II et III).

Les polyesters amorphes riches en acide isophtalique et les polyesters semi-cristallins utilisés selon l'invention sont préparés selon les méthodes conventionnelles de synthèse des polyesters, en utilisant un excès d'acide par rapport à l'alcool de manière à obtenir un polyester contenant des groupes carboxyle ayant l'indice d'acide souhaité.

Les polyesters amorphes contenant des groupes carboxyle, riches en acide isophtalique, peuvent être préparés selon des méthodes de synthèse en un ou deux stades. Dans ce dernier cas, dans le premier stade, on prépare un polyester contenant des groupes hydroxyle à partir d'une part, de l'acide isophtalique et éventuellement d'un ou plusieurs autre(s) acide(s) polycarboxylique(s) différent de l'acide isophtalique (ou leur dérivés fonctionnels) et d'autre part, d'un excès de néopentylglycol et éventuellement d'un ou plusieurs autre(s) composé(s) di- et /ou polyhydroxylé(s) et dans le deuxième stade, on estérifie le polyester contenant des groupes hydroxyle ainsi obtenu avec un acide dicarboxylique approprié, de préférence l'acide isophtalique, pour obtenir un polyester amorphe contenant des groupes carboxyle, riche en acide isophtalique.

Les polyesters semi-cristallins contenant des groupes carboxyle sont généralement préparés selon un procédé en un stade à partir d'un diol aliphatique ou cycloaliphatique approprié et d'un excès de l'acide dicarboxylique aliphatique approprié en incorporant éventuellement un acide polycarboxylique ou un polyol dans le mélange de réaction dans le cas où l'on souhaite obtenir un polyester semi-cristallin ramifié.

On effectue généralement la synthèse de ces polyesters dans un réacteur classique muni d'un agitateur, d'une entrée de gaz inerte (par exemple l'azote), d'une colonne de distillation reliée à un condenseur et d'un thermomètre attaché à un thermorégulateur.

Les conditions d'estérification sont classiques, à savoir que l'on peut utiliser un catalyseur d'estérification usuel, soit un dérivé de l'étain, tel que le dilaurate de dibutylétain, l'oxyde de dibutylétain ou le trioctanoate de n-butylétain, soit un dérivé de titane tel que le titanate de tétrabutyle, à raison de 0,01 à 1% en poids de réactifs. On peut y ajouter éventuellement un antioxydant de type phénolique tel que l'Irganox 1010 (vendu par Ciba-Geigy), seul ou en mélange avec un stabilisant comme par exemple le phosphite de tributyle, à raison de 0,01 à 1% en poids de réactifs.

La polyestérification est généralement effectuée à une température que l'on augmente progressivement d'environ 130°C à environ 180 à 250°C d'abord sous la pression normale, puis sous pression réduite en maintenant cette température jusqu'à obtention d'un polyester présentant l'indice d'hydroxyle et/ou d'acide désiré. Lorsqu'on procède en deux stades pour préparer les polyesters amorphes riches en acide isophtalique, on laisse refroidir le mélange réactionnel renfermant le polyester contenant des groupes hydroxyle obtenu au premier stade vers 200°C, on ajoute la quantité voulue d'acide dicarboxylique, on porte la température à 230-240°C et on maintient cette température d'abord sous la pression normale puis sous pression réduite, jusqu'à obtention d'un polyester amorphe contenant des groupes carboxyle ayant l'indice d'acide désiré.

Le degré d'estérification est suivi par détermination de la quantité d'eau formée au cours de la réaction et des propriétés du polyester obtenu, par exemple l'indice d'acide, l'indice d'hydroxyle, le poids moléculaire, la température de transition vitreuse (Tg), le point de fusion (Tm) et la viscosité à l'état fondu.

Au terme de la synthèse, lorsque le polyester est encore à l'état fondu, on peut y ajouter éventuellement un catalyseur de réticulation connu en soi, à raison de 0,01 à 1,5% en poids du polyester. Ces catalyseurs peuvent être de type amine tels que la 2-phénylimidazoline, de type phosphine tel que la triphénylphosphine ou des sels d'ammonium ou de phosphonium tels que le chlorure de tétrapropylammonium, le bromure de tétrabutylammonium, le chlorure de benzyltriphénylphosphonium ou le bromure d'éthyltriphénylphosphonium. Ensuite, on décharge le polyester du réacteur, on le coule en couche épaisse, on le laisse refroidir et on le broie en grains ayant une dimension moyenne allant d'une fraction de mm à quelques mm.

Le polyester amorphe contenant des groupes carboxyle, riche en acide isophtalique, le polyester semi-cristallin contenant des groupes carboxyle et l'agent de réticulation forment conjointement le liant de base des compositions de revêtement thermodurcissables en poudre selon l'invention.

Dans les compositions de revêtement thermodurcissables en poudre conformes à l'invention, la quantité de polyester amorphe riche en acide isophtalique représente généralement environ 60 à 87% en poids et la quantité de polyester semi-cristallin environ 13 à 40% en poids calculé par rapport au poids total des polyesters amorphe et semi-cristallin. Cependant il a été observé que la brillance mesurée sous un angle de 60°C selon la norme ASTM D 523 des revêtements obtenus diminue lorsque la quantité de polyester amorphe diminue et la quantité de polyester semi-cristallin augmente. C'est pourquoi, dans les compositions conformes à l'invention la quantité de polyester amorphe riche en acide isophtalique représente de préférence 60 à 82% en poids et la quantité de polyester semi-cristallin de préférence 18 à 40% calculé en poids par rapport au poids total des polyesters amorphe et semi-cristallin.

Les agents de réticulation qui peuvent être utilisés dans les compositions conformes à l'invention sont tous les composés organiques ayant des groupes fonctionnels capables de réagir avec les groupes carboxyle des polyesters pour produire la réticulation du liant. Des agents de réticulation typiques sont par exemple les composés polyépoxydés et les β-hydroxyalkylamides. Des agents de réticulation particulièrement préférés sont l'isocyanurate de triglycidyle (Araldite PT 810 vendu par Ciba-Geigy), le mélange 75/25 de téréphtalate de diglycidyle et de trimellitate de triglycidyle (Araldite PT 910 vendu par Ciba-Geigy), les copolymères acryliques contenant des groupes glycidyle comme le GMA 252 vendu par ESTRON et le bis(N,N-dihydroxyéthyl)adipamide (PRIMID XL 552 vendu par EMS).

Dans les compositions de revêtement thermodurcissables en poudre conformes à l'invention, le rapport de quantité entre les polyesters amorphe et semi-cristallin contenant des groupes carboxyle, d'une part et l'agent de réticulation, d'autre part, est tel qu'il y a de 0,5 à 1,5 équivalents de groupes carboxyle par équivalent de groupes fonctionnels (par exemple de groupes époxy) dans l'agent de réticulation.

On utilise de préférence l'agent de réticulation en une quantité d'environ 4 à 25% en poids calculé par rapport au poids total du liant.

Les compositions de revêtements en poudre conformes à l'invention contiennent donc en général comme liant (a) de 45 à 83% en poids de polyester amorphe riche en acide isophtalique, (b) de 13 à 30% en poids de polyester semi-cristallin et (c) de 4 à 25% en poids d'agent de réticulation, et de préférence (a) de 45 à 78% en poids de polyester amorphe riche en acide isophtalique, (b) de 18 à 30% en poids de polyester semi-cristallin et (c) de 4 à 25% en poids d'agent de réticulation.

La présente invention se rapporte également à l'utilisation des compositions de revêtement thermodurcissables en poudre conforme à l'invention pour la préparation de vernis et peintures en poudre fournissant des revêtements de faible brillant, de préférence des revêtements mats, ainsi qu'aux vernis et peintures en poudre obtenus à l'aide de ces compositions.

Les vernis et peintures en poudre conformes à l'invention peuvent être préparés en mélangeant de manière homogène le polyester amorphe riche en acide isophtalique, le polyester semi-cristallin et l'agent de réticulation avec les diverses substances auxiliaires utilisées conventionnellement pour la fabrication de vernis et peintures en poudre.

Cette homogénéisation est exécutée par exemple en mélangeant d'abord à sec à la température ambiante le polyester amorphe, le polyester semi-cristallin, l'agent de réticulation et les diverses substances auxiliaires dans un mélangeur, par exemple un mélangeur à tambour et en faisant passer ensuite le mélange ainsi obtenu dans une extrudeuse, par exemple une extrudeuse à vis unique de type Buss-Ko-Kneter ou une extrudeuse à double vis de type PRISM ou A.P.V. pour y produire une homogénéisation en phase fondue à une température située dans l'intervalle de 80 à 150°C. Puis, on laisse refroidir l'extrudat, on le broie et on le tamise pour obtenir une poudre dont la dimension des particules est comprise entre 10 et 150 micromètres.

Si on le désire, le polyester amorphe riche en acide isophtalique et le polyester semi-cristallin peuvent être mélangés au préalable à l'état fondu dans le réacteur de synthèse ou dans une extrudeuse telle d'une extrudeuse BETOL BTS 40 avant d'être ajoutés sous forme de mélange aux autres ingrédients de la composition pour le mélange à sec à la température ambiante. Il est cependant plus commode d'ajouter les deux polyesters de manière séparée aux autres ingrédients de la composition en poudre.

Les substances auxiliaires qui peuvent être ajoutées aux compositions de revêtement thermodurcissables en poudre sont par exemple des pigments et des colorants comme le dioxyde de titane, les oxydes de fer, l'oxyde de zinc, etc., les hydroxydes de métaux, les poudres métalliques, les sulfures, les sulfates, les carbonates, les silicates comme par exemple le silicate d'ammonium, le noir de carbone, le talc, les kaolins, les barytes, les bleus de fer, les bleus de plomb, les rouges organiques, les marrons organiques, etc., des agents régulateurs de fluidité comme le Resiflow PV5 (de WORLEE), le Modaflow (de MONSANTO) ou l'Acronal 4F (de BASF) et des agents de dégazage comme la benzoïne, etc. Ces substances auxiliaires sont utilisées en quantités usuelles, étant entendu que si les compositions thermodurcissables conformes à l'invention sont utilisées comme vernis, on omettra l'addition de substances opacifiantes. On peut également ajouter des composés absorbants les rayons ultraviolets tels que le Tinuvin 900 de Ciba-Geigy et des stabilisants à la lumière à base d'amines à empêchement stérique, tels que le Tinuvin 144 de Ciba-Geigy.

La présente invention a également pour objet un procédé d'obtention d'un revêtement de faible brillant sur un article dans lequel on applique sur ledit article une composition de revêtement thermodurcissable en poudre conforme à l'invention telle que décrite ci-dessus, et on fait subir à l'article ainsi revêtu une cuisson à température élevée pendant une durée suffisante pour obtenir la réticulation complète du revêtement.

Les compositions de revêtement thermodurcissables en poudre peuvent être appliquées sur des articles de formes et de dimensions diverses, en particulier sur des articles en verre, en céramique et en métal tel que l'acier et l'aluminium, par des techniques connues en soi pour le dépôt de poudres, c'est-à-dire par application au pistolet pulvérisateur dans un champ électrostatique où la poudre est chargée sous une tension de 30 à 100 kV par un courant continu de haute tension, ou au pistolet pulvérisateur triboélectrique dans lequel la poudre se charge par friction ou encore par la technique bien connue du dépôt en lit fluidisé.

Après avoir été appliquées sur l'article concerné, les poudres déposées subissent une cuisson au four à une température comprise entre 140 et 200°C pendant une durée pouvant atteindre 30 minutes pour faire fondre les particules de poudre et pour former une pellicule homogène qui s'étale parfaitement sur le substrat et pour finalement obtenir la réticulation et le durcissement complet du revêtement.

Les compositions de revêtement thermodurcissables en poudre conformes à la présente invention permettent d'obtenir des revêtements présentant un faible brillant. En effet, la brillance, mesurée sous un angle de 60°, selon la norme ASTM D 523 de ces revêtements s'élève toujours à une valeur inférieure à 50%.

De plus, comme il a déjà été expliqué plus haut, il est possible d'obtenir des revêtements ayant des niveaux de brillance différents en fonction de la quantité de polyester amorphe et de la quantité de polyester semi-cristallin utilisées dans ces compositions.

Grâce à la présente invention, on peut donc obtenir après cuisson des revêtements ayant le niveau de brillance voulu simplement en choisissant une composition en poudre qui contient les proportions requises de polyester amorphe et de polyester semi-cristallin.

Il faut cependant tenir compte du fait que la nature de l'agent de réticulation est également importante pour le niveau de brillance des revêtements obtenus après cuisson (voir l'exemple 11 ci-après). Quelques essais préliminaires permettront de déterminer facilement la composition qui convient pour obtenir un revêtement qui présente le niveau de brillance désiré.

Comme on le montre plus en détail dans les exemples qui vont suivre, grâce à la présente invention, on peut donc préparer des peintures et vernis en poudre capables de fournir des revêtements présentant le niveau de brillance exigé par l'application envisagée, c'est-à-dire des revêtements satinés ou semi-brillants dont la brillance, mesurée sous un angle de 60°, selon la norme ASTM D 523 est inférieure à 50%, ou des revêtements mats, dont la brillance, mesurée dans les mêmes conditions, est inférieure à 35%.

En outre, les compositions thermodurcissables en poudre conformes à la présente invention sont capables de produire des revêtements de faible brillant présentant un ensemble d'autres propriétés avantageuses, entre autres un aspect lisse, uniforme, sans défauts de surface et exempt de "peau d'orange", de bonnes propriétés mécaniques et une excellente résistance aux intempéries et aux rayons UV. L'obtention d'une finition satinée ou mate ne s'accompagne donc pas d'une altération des autres propriétés des revêtements comme c'est souvent le cas pour les compositions en poudre de l'état de la technique capables de produire des revêtements de faible brillant.

Enfin, un autre avantage important des compositions de revêtement thermodurcissables en poudre conformes à la présente invention par rapport aux compositions en poudre de l'état de la technique réside dans le fait que leurs propriétés ne sont que peu ou pas sensibles aux variations des conditions d'extrusion et que ces compositions permettent donc de produire continuellement des revêtements de faible brillant. satinés ou mats, ayant sensiblement le même degré de brillance ou de matité.

Les exemples qui vont suivre illustrent l'invention sans la limiter. Dans ces exemples, la détermination de certaines valeurs caractéristiques a été effectuée selon les méthodes décrites ci-dessous:

- la brillance: elle est exprimée en intensité de la lumière réfléchie, en pour cent, par rapport à l'intensité de la lumière incidente sous un angle de 60° et mesurée selon la norme ASTM D 523;
- la résistance au choc: elle est mesurée au moyen d'un appareil Gardner selon la norme ASTM D 2794. Des panneaux en acier laminé à froid munis d'un revêtement durci sont soumis à des chocs d'intensités croissantes sur le côté revêtu (impact direct) et sur le côté non revêtu (impact inverse). Le choc le plus élevé qui ne provoque pas de fissuration du revêtement est rapporté en kg.cm;
- la dureté au crayon: elle est déterminée au moyen d'un appareil d'essai de la dureté selon WOLFF WILBRON (norme ASTM D 3363); la dureté rapportée est celle du crayon le plus dur qui ne provoque pas d'entaille dans le revêtement selon une échelle qui va de 6B (le plus mou) à 6H (le plus dur);
- le test de vieillissement accéléré QUV: des panneaux en aluminium chromé munis d'un revêtement durci à tester sont placés dans un appareil d'essai "QUV Panel", de la société Q-Panel Co (Cleveland - Etats-Unis) et soumis à plusieurs cycles d'exposition à des lampes UV et à l'humidité, à diverses températures. Parmi les différents cycles de ce type décrits dans la norme ASTM G 53-88, dans le cas présent, on a soumis les revêtements à un cycle de 8 heures d'exposition à une lampe UVA fluorescente (longueur d'onde de 340 nm et intensité de 0,77 W/m$^2$/nm) simulant les effets néfastes de la lumière du soleil, à 60°C, et de 4 heures de condensation de vapeur d'eau, lampe éteinte, à 40°C; on note l'évolution de la brillance, mesurée sous un angle de 60°, selon la norme ASTM D 523. Après 3.000 heures d'exposition à ce test, on a déterminé la rétention de la brillance selon l'équation:

$$\% \text{ rétention} = \frac{\text{brillance } 60° \text{ après 3.000 heures d'exposition}}{\text{brillance } 60° \text{ au début de l'expérience}} \times 100\%,$$

et également le changement de teinte delta E, calculé selon la norme ASTM D 2244;
- l'indice d'acide et l'indice d'hydroxyle ont été déterminés par titration selon les normes DIN 53402 et DIN 53240 et exprimés en mg de KOH par gramme de polyester;
- la température de transition vitreuse (Tg) et le point de fusion (Tm) ont été déterminés par calorimétrie à balayage différentiel (DSC) à une vitesse de balayage de 20°C par minute;
- le poids moléculaire moyen en nombre ($\overline{M}n$) des polyesters a été déterminé selon l'équation

$$\overline{M}n = \frac{\text{fonctionnalité} \times 56.100}{I_A}$$

où $I_A$ est l'indice d'acide exprimé en mg de KOH par gramme de polyester,
- la viscosité à l'état fondu des polyesters, exprimée en mPa.s, a été mesurée au viscosimètre cône/plateau de ICI selon la norme ASTM D 4287-88; elle est également dénommée "viscosité ICI" et a été mesurée aux températures indiquées dans les exemples.

Sauf indication contraire, les parties citées dans les exemples sont des parties en poids.

Exemple 1 - Synthèse de polyesters amorphes.

a) en un stade.

Dans un ballon de 10 litres à quatre cols muni d'un agitateur, d'une entrée d'azote, d'une colonne de distillation reliée à un condenseur refroidi à l'eau et d'un thermomètre attaché à un thermorégulateur, on introduit un mélange de 399,6 parties (3,84 moles) de néopentylglycol et de 22,2 parties (0,16 mole) de triméthylolpropane.

On chauffe le mélange, sous agitation et sous azote, jusqu'à une température d'environ 130°C et l'on y ajoute 722,9 parties (4,35 moles) d'acide isophtalique et 2,5 parties de trioctanoate de n-butylétain comme catalyseur d'estérification. Puis, on élève progressivement la température du mélange de réaction à 230°C. De l'eau commence à distiller du réacteur à partir de 180°C. Lorsque la distillation de l'eau sous la pression atmosphérique est terminée, on établit progressivement un vide de 50 mm Hg. La température du mélange de réaction est maintenue pendant 3 heures à 230°C et sous une pression de 50 mm Hg.

Finalement, on laisse refroidir le polyester obtenu à 180°C et on le décharge du réacteur. Le polyester contenant des groupes carboxyle ainsi obtenu possède les caractéristiques suivantes:

| | |
|---|---|
| Indice d'acide | 32 mg de KOH/g |
| Indice d'hydroxyle | 2 mg de KOH/g |
| Viscosité ICI (à 200°C) | 8000 mPa.s |
| Température de transition vitreuse (Tg) | 59 °C |
| (DSC à 20°C/minute) | |
| Poids moléculaire moyen en nombre ($\overline{M}n$) | 5423 (théorique) |

b) en deux stades.

1er stade

Dans un réacteur comme décrit en a) ci-dessus, on introduit une mélange de 423,5 parties (4,07 moles) de néopentylglycol et de 22,2 parties (0,16 mole) de triméthylolpropane. On chauffe le mélange sous agitation et sous azote jusqu'à une température d'environ 130°C et l'on y ajoute 121,8 parties (0,733 mole) d'acide téréphtalique, 487,1 parties (2,93 moles) d'acide isophtalique et 2,3 parties de trioctanoate de n-butylétain comme catalyseur d'estérification.

On poursuit la réaction à 220°C sous la pression atmosphérique jusqu'à ce qu'environ 95% de la quantité théorique d'eau est distillée. On obtient un polyester transparent contenant des groupes hydroxyle qui possède les caractéristiques suivantes:

| | |
|---|---|
| Indice d'hydroxyle | 59 mg de KCH/g |
| Indice d'acide | 12 mg de KOH/g |
| Viscosité ICI (à 175°C) | 2200 mPa.s |

2ème stade

On laisse refroidir le polyester obtenu au premier stade à 200°C et l'on y ajoute 110,9 parties (0,67 mole) d'acide isophtalique. Ensuite le mélange est chauffé progressivement à 230°C. On maintient le mélange à cette température pendant 2 heures et lorsque le mélange de réaction devient limpide, on établit progressivement un vide de 50 mm Hg.

On poursuit la réaction pendant 3 heures à 230°C et sous une pression de 50 mm Hg.

Le polyester contenant des groupes carboxyle ainsi obtenu possède les caractéristiques suivantes:

| | |
|---|---|
| Indice d'acide | 31 mg de KOH/g |
| Indice d'hydroxyle | 3 mg de KOH/g |
| Viscosité ICI (à 200°C) | 6600 mPa.s |
| Température de transition vitreuse (Tg) | 57 °C |
| (DSC à 20°C/minute) | |
| Poids moléculaire moyen en nombre ($\overline{M}n$) | 5423 (théorique) |

c) Selon le mode opératoire en deux stades décrit en b) ci-dessus, on prépare encore un autre polyester amorphe contenant des groupes carboxyle, riche en acide isophtalique. Au premier stade, on prépare de la même manière qu'en b) ci-dessus un polyester contenant des groupes hydroxyle à partir de 423,5 parties (4,07 moles) de néopentylglycol, 304,5 parties (1,83 mole) d'acide téréphtalique, 304,5 parties (1,83 mole) d'acide isophtalique et 2,3 parties de trioctanoate de n-butylétain comme catalyseur d'estérification. La réaction est effectuée à 230°C sous la pression atmosphérique (au lieu de 220°C).

Le polyester transparent contenant des groupes hydroxyle possède les caractéristiques suivantes:

| | |
|---|---|
| Indice d'hydroxyle | 57 mg de KOH/g |
| Indice d'acide | 13 mg de KOH/g |
| Viscosité ICI (à 175°C) | 1200 mPa.s |

Au deuxième stade, on prépare de la même manière qu'en b) ci-dessus un polyester contenant des groupes carboxyle; on ajoute 110,9 parties (0,67 mole) d'acide isophtalique comme en b) ci-dessus.

Le polyester contenant des groupes carboxyle ainsi obtenu possède les caractéristiques suivantes:

| | |
|---|---|
| Indice d'acide | 32 mg de KOH/g |
| Indice d'hydroxyle | 2,1 mg de KOH/g |
| Viscosité ICI (à 200°C) | 3000 mPa.s |
| Température de transition vitreuse (Tg) (DSC à 20°C/minute) | 53 °C |
| Poids moléculaire moyen en nombre ($\overline{M}$n) | 3740 (théorique) |

d) A titre de comparaison, on prépare également selon le mode opératoire en deux stades décrit en b) ci-dessus, un polyester amorphe contenant des groupes carboxyle, riche en acide téréphtalique; il contient une quantité mineure d'acide isophtalique (16,2 moles %) et une quantité majeure d'acide téréphtalique (83,8 moles %).

Au premier stade, on prépare de la même manière qu'en b) ci-dessus un polyester contenant des groupes hydroxyle à partir de 417,8 parties (4,02 moles) de néopentylglycol, 600,7 parties (3,62 moles) d'acide téréphtalique et 2,2 parties de trioctanoate de n-butylétain comme catalyseur d'estérification. La réaction est effectuée à 240°C sous la pression atmosphérique (au lieu de 220°C).

Le polyester transparent contenant des groupes hydroxyle possède les caractéristiques suivantes:

| | |
|---|---|
| Indice d'hydroxyle | 61 mg de KOH/g |
| Indice d'acide | 8 mg de KOH/g |
| Viscosité ICI (à 200°C) | 1200 mPa.s |

Au deuxième stade, on prépare de la même manière qu'en b) ci-dessus un polyester contenant des groupes carboxyle, mais on ajoute 117,1 parties (0,7 mole) d'acide isophtalique (au lieu de 110,9 parties); le mélange est chauffé progressivement à 240°C (au lieu 230°C) et il est maintenu à cette température pendant 3 heures. Lorsque le mélange de réaction devient limpide, on établit progressivement un vide de 50 mm Hg et on poursuit la réaction pendant 4 heures à 240°C et sous une pression de 50 mm Hg.

Le polyester contenant des groupes carboxyle ainsi obtenu possède les caractéristiques suivantes:

| | |
|---|---|
| Indice d'acide | 33 mg de KOH/g |
| Indice d'hydroxyle | 3 mg de KOH/g |
| Viscosité ICI (à 200°C) | 4700 mPa.s |
| Température de transition vitreuse (Tg) (DSC à 20°C/minute) | 57 °C |
| Poids moléculaire moyen en nombre ($\overline{M}$n) | 3740 (théorique) |

On laisse refroidir le polyester obtenu à 200°C et l'on y ajoute 1,3 parties de bromure d'éthyltriphénylphosphonium (catalyseur de réticulation). Après une heure d'agitation du mélange, on décharge le polyester du réacteur.

e) Selon le mode opératoire en un stade décrit en a) ci-dessus, on prépare un autre polyester amorphe contenant des groupes carboxyle, riche en acide isophtalique, à partir de 424,9 parties de néopentylglycol, de 722,2 parties d'acide isophtalique et 2,3 parties de trioctanoate de n-butylétain comme catalyseur d'estérification.

Le polyester contenant des groupes carboxyle ainsi obtenu possède les caractéristiques suivantes

| Indice d'acide | 31,5 mg de KOH/g |
|---|---|
| Viscosité ICI (à 200°C) | 2900 mPa.s |
| Température de transition vitreuse (Tg) | 52 °C |
| (DSC à 20°C/minute) | |

Exemple 2 - Synthèse de polyesters semi-cristallins.

a) Dans un réacteur comme décrit à l'exemple 1, on introduit un mélange de 739,9 parties (3,21 moles) d'acide 1,12-dodécanedioïque, 369,2 parties (3,12 moles) de 1,6-hexanediol et 2,5 parties de trioctanoate de n-butylétain comme catalyseur d'estérification.

On chauffe le mélange, sous agitation et sous azote, jusqu'à une température d'environ 140°C, température à laquelle de l'eau commence à distiller du réacteur. Puis, on élève progressivement la température du mélange de réaction à 225°C. Lorsque la distillation de l'eau sous la pression atmosphérique est terminée, on ajoute 1,0 partie de phosphite de tributyle comme stabilisant et 1,0 partie de trioctanoate de n-butyle et on établit progressivement un vide de 50 mm Hg. La température du mélange réactionnel est maintenue pendant 3 heures à 225°C et sous une pression de 50 mm Hg.

Le polyester semi-cristallin contenant des groupes carboxyle ainsi obtenu possède les caractéristiques suivantes:

| Indice d'acide | 11,5 mg de KOH/g |
|---|---|
| Indice d'hydroxyle | 0,5 mg de KOH/g |
| Viscosité ICI (à 150°C) | 7000 mPa.s |
| Point de fusion (Tm) | 67 °C |
| (DSC à 20°C/minute) | |
| Poids moléculaire moyen en nombre ($\overline{M}n$) | 11220 (théorique) |

On laisse refroidir le polyester obtenu à 160°C et l'on y ajoute 10 parties de Tinuvin 144 (stabilisant à la lumière) et 20 parties de Tinuvin 900 (absorbant de la lumière UV). Après une heure d'agitation du mélange, on décharge le polyester du réacteur, on le laisse refroidir à la température ambiante et on l'obtient sous la forme d'un produit solide blanc.

b) Selon le mode opératoire décrit en a) ci-dessus, on prépare un autre polyester semi-cristallin à partir de 750,7 parties (3,26 moles) d'acide 1,12-dodécanedioïque, 353,7 parties (2,99 moles) de 1,6-hexanediol et 2,5 parties de trioctanoate de n-butylétain comme catalyseur d'estérification.

Le polyester semi-cristallin contenant des groupes carboxyle ainsi obtenu possède les caractéristiques suivantes:

| Indice d'acide | 29,5 mg de KOH/g |
|---|---|
| Indice d'hydroxyle | 0,6 mg de KOH/g |
| Viscosité ICI (à 100°C) | 2000 mPa.s |
| Point de fusion (Tm) | 65 °C |
| (DSC à 20°C/minute) | |
| Poids moléculaire moyen en nombre ($\overline{M}n$) | 3740 (théorique) |

On laisse refroidir le polyester obtenu à 160°C et l'on y ajoute 10 parties de Tinuvin 144 et 20 parties de Tinuvin 900. Après une heure d'agitation du mélange, on décharge le polyester du réacteur, on le laisse refroidir à la température ambiante et on l'obtient sous la forme d'un produit solide blanc.

c) Selon la mode opératoire décrit en a) ci-dessus, on prépare un autre polyester semi-cristallin à partir de 750,2 parties (3,25 moles) d'acide 1,12-dodécanedioïque, 351,2 parties (2,97 moles) de 1,6-hexanediol, 9,567 parties (0,07 mole) de triméthylolpropane et 2,5 parties de trioctanoate de n-butylétain comme catalyseur d'estérification.

Le polyester semi-cristallin contenant des groupes carboxyle ainsi obtenu possède les caractéristiques suivantes:

| Indice d'acide | 21,3 mg de KOH/g |
|---|---|
| Indice d'hydroxyle | 0,9 mg de KOH/g |
| Viscosité ICI (à 100°C) | 4000 mPa.s |
| Point de fusion (Tm) | 63 °C |
| (DSC à 20°C/minute) | |
| Poids moléculaire moyen en nombre ($\overline{M}$n) | 7012 (théorique) |

On laisse refroidir le polyester obtenu à 160°C, et l'on y ajoute 10 parties de Tinuvin 144 et 20 parties de Tinuvin 900. Après une heure d'agitation du mélange, on décharge le polyester du réacteur, on le laisse refroidir à la température ambiante et on l'obtient sous la forme d'un produit solide blanc.

d) Selon le mode opératoire décrit en a) ci-dessus, on prépare un autre polyester semi-cristallin à partir de 897,4 parties (3,90 moles) d'acide 1,12-dodécanedioïque, 236,4 parties (3,81 moles) d'éthylène glycol et 2,5 parties de trioctanoate de n-butylétain comme catalyseur d'estérification.
Le polyester semi-cristallin contenant des groupes carboxyle ainsi obtenu possède les caractéristiques suivantes:

| Indice d'acide | 8,0 mg de KOH/g |
|---|---|
| Indice d'hydroxyle | 2,5 mg de KOH/g |
| Viscosité ICI (à 150°C) | 7200 mPa.s |
| Point de fusion (Tm) | 76 °C |
| (DSC à 20°C/minute) | |
| Poids moléculaire moyen en nombre ($\overline{M}$n) | 11220 (théorique) |

On laisse refroidir le polyester obtenu à 160°C et l'on y ajoute 10 parties de Tinuvin 144 et 20 parties de Tinuvin 900. Après une heure d'agitation du mélange, on décharge le polyester du réacteur, on le laisse refroidir à la température ambiante et on l'obtient sous la forme d'un produit solide blanc..

e) A titre de comparaison, on prépare également un polyester semi-cristallin contenant des groupes carboxyle non conforme à l'invention de la manière suivante:

1er stade
Dans un réacteur comme décrit à l'exemple 1, on introduit 453,4 parties (3,84 moles) de 1,6-hexanediol. On chauffe le contenu du réacteur jusqu'à 150°C pour fondre le produit et l'on y ajoute 589,9 parties (3,55 moles) d'acide téréphtalique et 2,3 parties de trioctanoate de n-butylétain comme catalyseur d'estérification. On poursuit la réaction à 235°C sous la pression atmosphérique jusqu'à ce qu'environ 95% de la quantité théorique d'eau est distillée. On obtient un polyester contenant des groupes hydroxyle qui possède les caractéristiques suivantes:

| Indice d'hydroxyle | 40 mg de KOH/g |
|---|---|
| Indice d'acide | 5 mg de KOH/g |
| Viscosité ICI (à 175°C) | 800 mPa.s |

2ème stade
On laisse refroidir le polyester obtenu au premier stade à 200°C et l'on y ajoute 91,7 parties (0,55 mole) d'acide isophtalique. Ensuite le mélange est chauffé progressivement à 235°C. On maintient le mélange à cette température pendant 2 heures, on y ajoute 1.0 partie de tributylphosphite comme stabilisant et on établit progressivement un vide de 50 mm Hg. La température du mélange de réaction est maintenue pendant 2 heures à 235°C et sous une pression de 50 mm Hg.
Le polyester semi-cristallin contenant des groupes carboxyle ainsi obtenu possède les caractéristiques suivantes:

| Indice d'acide | 32 mg de KOH/g |
|---|---|

(suite)

| Indice d'hydroxyle | 0,5 mg de KOH/g |
|---|---|
| Viscosité ICI (à 150°C) | 7200 mPa.s |
| Point de fusion (Tm) | 130 °C |
| (DSC à 20°C/minute) | |
| Poids moléculaire moyen en nombre ($\overline{M}$n) | 3740 (théorique) |

On laisse refroidir le polyester obtenu à 160°C et l'on y ajoute 10 parties de Tinuvin 144 et 20 parties de Tinuvin 900. Après une heure d'agitation du mélange, on décharge le polyester du réacteur, on le laisse refroidir à la température ambiante et on l'obtient sous la forme d'un produit solide blanc.

f) A titre de comparaison, on prépare encore un polyester semi-cristallin exactement de la même manière qu'en d) ci-dessus, à partir de 458,24 parties (3,88 moles) de 1,6-hexanediol et 589,2 parties (3,55 moles) d'acide téréphtalique (au premier stade) et de 91,4 parties (0,62 mole) d'acide adipique (au deuxième stade).
Le polyester semi-cristallin contenant des groupes carboxyle ainsi obtenu possède les caractéristiques suivantes:

| Indice d'acide | 34 mg de KOH/g |
|---|---|
| Indice d'hydroxyle | 3 mg de KOH/g |
| Viscosité ICI (à 200°C) | 700 mPa.s |
| Point de fusion (Tm) | 129 °C |
| (DSC à 20°C/minute) | |
| Poids moléculaire moyen en nombre ($\overline{M}$n) | 3400 (théorique) |

Ce polyester semi-cristallin possède les mêmes caractéristiques que le polyester semi-cristallin décrit à l'exemple 1.a. du brevet européen 521.992.
Au terme de la synthèse, on laisse refroidir le polyester obtenu et l'on y ajoute 10 parties de Tinuvin 144 et 20 parties de Tinuvin 900. Après une heure d'agitation du mélange, on décharge le polyester du réacteur, on le laisse refroidir à la température ambiante et on l'obtient sous la forme d'un produit solide blanc.

g) Selon le mode opératoire décrit en a) ci-dessus, on prépare un autre polyester semi-cristallin à partir de 757,8 parties d'acide 1,12-dodécanedioïque, 351,2 parties de 1,4-cyclohexanediol et 2,5 parties de trioctanoate de n-butylétain comme catalyseur d'estérification.
Le polyester semi-cristallin contenant des groupes carboxyle ainsi obtenu possède les caractéristiques suivantes:

| Indice d'acide | 31,3 mg de KOH/g |
|---|---|
| Viscosité ICI (à 150°C) | 1500 mPa.s |
| Point de fusion (Tm) (DSC à 20°C/minute) | 65 °C |

h) Selon la mode opératoire décrit en a) ci-dessus, on prépare un autre polyester semi-cristallin à partir de 700,1 parties d'acide 1,12-dodécanedioïque, 399,8 parties de 1,4-cyclohexanediméthanol et 2,5 parties de trioctanoate de n-butylétain comme catalyseur d'estérification.
Le polyester semi-cristallin contenant des groupes carboxyle ainsi obtenu possède les caractéristiques suivantes:

| Indice d'acide | 33,4 mg de KOH/g |
|---|---|
| Viscosité ICI (à 150°C) | 1500 mPa.s |
| Point de fusion (Tm) (DSC à 20°C/minute) | 47 °C |

i) Selon le mode opératoire décrit en a) ci-dessus, on prépare un autre polyester semi-cristallin à partir de 709,4 parties d'acide 1,12-dodécanedioïque 369,74 parties de 1,4 cyclohexanediméthanol et 2,5 parties de trioctanoate de n-butylétain comme catalyseur d'estérification.

Le polyester semi-cristallin contenant des groupes carboxyle ainsi obtenu possède les caractéristiques suivantes:

| Indice d'acide | 33,0 mg de KOH/g |
|---|---|
| Viscosité ICI (à 150°C) | 3400 mPa.s |
| Point de fusion (Tm) (DSC à 20°C/minute) | 45 °C |

j) Selon le mode opératoire décrit en a) ci-dessus, on prépare un autre polyester semi-cristallin à partir de 500,7 parties d'acide 1,12-dodécanedioïque, 166,9 parties d'acide adipique, 439,8 parties de 1,4-cyclohexanediméthanol et 2,5 parties de trioctanoate de n-butylétain comme catalyseur d'estérification.

Le polyester semi-cristallin contenant des groupes carboxyle ainsi obtenu possède les caractéristiques suivantes:

| Indice d'acide | 32,4 mg de KOH/g |
|---|---|
| Viscosité ICI (à 150°C) | 1300 mPa.s |
| Point de fusion (Tm) (DSC à 20°C/minute) | 45 °C |

Exemples 3 à 15 et exemples comparatifs I, II et III - Préparation de compositions de revêtement thermodurcissables en poudre.

On prépare 16 compositions thermodurcissables en poudre de la manière suivante. On mélange à sec à la température ambiante un polyester amorphe contenant des groupes carboxyle préparé comme décrit à l'exemple 1, un polyester semi-cristallin contenant des groupes carboxyle préparé comma décrit à l'exemple 2, un agent de réticulation et diverses substances auxiliaires utilisées conventionnellement pour la fabrication de peintures en poudre. La nature et les quantités de ces produits sont indiquées dans le tableau 1 ci-dessous. Le mélange obtenu est homogénéisé dans une extrudeuse à double vis (PRISM 16 mm L/D 15/ 1) à une température d'extrusion de 85°C. L'extrudat est refroidi, concassé et broyé dans un broyeur RETSCH ZM 100 (tamis de 0,5 $\mu$m), puis tamisé pour former une poudre dont la dimension de particules est comprise entre 10 et 100 micromètres.

Pour évaluer les propriétés des revêtements obtenus avec ces compositions, les poudres obtenues sont déposées par projection à l'aide d'un pistolet pulvérisateur électrostatique Gema-Volstatic PCG 1 sur des panneaux en acier laminé à froid sous une tension de 60 à 100 kV, afin d'obtenir une épaisseur de film comprise entre 50 et 70 micromètres.

Les panneaux ainsi revêtus sont ensuite transférés à un four ventilé à l'air, où les compositions déposées subissent une cuisson de 15 minutes à une température de 200°C.

Les revêtements durcis obtenus présentent tous un aspect lisse, uniforme et sans défauts, tels que cratères, piqûres ou "peau d'orange".

Les différentes compositions et les propriétés des revêtements obtenus sont décrites au tableau I ci-dessous.

EP 1 040 171 B1

### Tableau I - Exemples de peintures blanches.

Composition

| (parties en poids) | 3 | 4 | 5 | 6 | 7 | 8 | 9 | 10 | 11 | 12 | 13 | 14 | 15 | I (1) | II (1) | III (1) |
|---|---|---|---|---|---|---|---|---|---|---|---|---|---|---|---|---|
| **Polyester amorphe** | | | | | | | | | | | | | | | | |
| de l'exemple 1.a. | 423 | 446,4 | 441,6 | - | - | 441,6 | 446,4 | 474,3 | 427,3 | - | - | - | 512,9 | - | 446,4 | 446,4 |
| de l'exemple 1.b. | - | - | - | 446,4 | - | - | - | - | - | - | - | - | - | - | - | - |
| de l'exemple 1.c. | - | - | - | - | 423 | - | - | - | - | - | - | - | - | - | - | - |
| de l'exemple 1.d. (1) | - | - | - | - | - | - | - | - | - | - | - | - | - | 446,4 | - | - |
| de l'exemple 1.e | - | - | - | - | - | - | - | - | - | 512,9 | 512,9 | 512,9 | | | - | - |
| **Polyester semi-cristallin** | | | | | | | | | | | | | | | | |
| de l'exemple 2.a. | 141 | 111,6 | 110,4 | 111,6 | 141 | - | - | - | 142,5 | - | - | - | - | 111,6 | - | - |
| de l'exemple 2.b. | - | - | - | - | - | - | - | 83,7 | - | - | - | - | - | - | - | - |
| de l'exemple 2.c. | - | - | - | - | - | 110,4 | - | - | - | - | - | - | - | - | - | - |
| de l'exemple 2.d. | - | - | - | - | - | - | 111,6 | - | - | - | - | - | - | - | - | - |
| de l'exemple 2.e. (1) | - | - | - | - | - | - | - | - | - | - | - | - | - | - | 111,6 | - |
| de l'exemple 2.f.(1)(7) | - | - | - | - | - | - | - | - | - | - | - | - | - | - | - | 111,6 |
| de l'exemple 2.g. | - | - | - | - | - | - | - | - | - | 128,5 | - | - | - | - | - | - |
| de l'exemple 2.h. | - | - | - | - | - | - | - | - | - | - | 128,5 | - | - | - | - | - |
| de l'exemple 2.i. | - | - | - | - | - | - | - | - | - | - | - | 128,5 | - | - | - | - |
| de l'exemple 2.j. | - | - | - | - | - | - | - | - | - | - | - | - | 128,5 | - | - | - |
| **Agent de réticulation A(2)** | 36 | 42 | - | 42 | 36 | - | 42 | 42 | | 48,3 | 48,3 | 48,3 | 48,3 | 42 | 42 | 42 |
| **Agent de réticulation B(3)** | - | - | 48 | - | - | 48 | - | - | - | - | - | - | - | - | - | - |

| Composition (parties en poids) | 3 | 4 | 5 | 6 | 7 | 8 | 9 | 10 | 11 | 12 | 13 | 14 | 15 | I (1) | II (1) | III |
|---|---|---|---|---|---|---|---|---|---|---|---|---|---|---|---|---|
| Agent de réticulation C(4) | - | - | - | - | - | - | - | - | 30 | - | - | - | - | - | - | -- |
| Dioxyde de titane (5) | 300 | 300 | 300 | 300 | 300 | 300 | 300 | 300 | 300 | 296 | 296 | 296 | 296 | 300 | 300 | 300 |
| Blanc Fix F | 100 | 100 | 100 | 100 | 100 | 100 | 100 | 100 | 100 | - | - | - | - | 100 | 100 | 100 |
| Agent régulateur de fluidité (6) | 10 | 10 | 10 | 10 | 10 | 10 | 10 | 10 | 10 | 9,9 | 9,9 | 9,9 | 9,9 | 10 | 10 | 10 |
| Benzoïne | 3,5 | 3,5 | 3,5 | 3,5 | 3,5 | 3,5 | 3,5 | 3,5· | 3,5 | 3,4 | 3,4 | 3,4 | 3,4 | 3,5 | 3,5 | 3,5 |
| BTC (8) - | - | - | - | - | - | - | - | - | 1,0 | 1,0 | 1,0 | 1,0 | - | - | - | |
| Propriétés Brillance (60°) | 18 | 29 | 23 | 25 | 34 | 29 | 28 | 44 | 49 | 40 | 35 | 49 | 48 | 81 | 84 | 86 |
| Résistance au choc (kg cm) direct 200 | 200 | 80 | 140 | 180 | 100 | 160 | 120 | 200 | 100 | 100 | 200 | 140 | 160 | 40 | 60 | |
| Inverse 200 | 200 | 100 | 160 | 180 | 120 | 160 | 120 | 200 | 100 | 80 | 200 | 140 | 160 | 20 | 40 | |
| Dureté au crayon | H | 2H | H | H | H | H | H | 2H | H | - | - | - | - | H | H | 2H |

(1) à titre comparatif

(2) isocyanurate de triglycidyle (Araldite PT 810 de Ciba-Geigy)

(3) mélange 75/25 de téréphtalate de diglycidyle et de trimellitate de triglycidyle (Araldite PT 910 de Ciba-Geigy)

(4) bis(N,N-dihydroxyéthyl)adipamide (Primid XL-552 de EMS)

(5) Kronos 2310 (Ciba-Geigy)

(6) Resiflow PV5 (Worlée Chemie)

(7) polyester décrit à l 'exemple 1.a. du brevet européen 521.992

(8) chlorure de benzyltriphénylphosphonium

On voit que seules les compositions conformes à l'invention contenant à la fois un polyester amorphe riche en acide isophtalique et un polyester semi-cristallin préparé à partir d'un acide dicarboxylique aliphatique saturé à chaîne linéaire (acide 1,12-dodécanedioïque) et d'un diol aliphatique saturé à chaîne linéaire (1,6-hexanediol ou éthylène glycol) ou d'un diol cycloaliphatique (1,4-cyclohexanediol ou 1,4-cyclohexanediméthanol) donnent des revêtements dont la brillance est inférieure à 50%.

La composition de l'exemple comparatif I qui contient un polyester amorphe riche en acide téréphtalique donne un revêtement qui est très brillant (brillance de 81%).

De même, les compositions de l'exemple comparatif II et de l'exemple III qui contiennent un polyester semi-cristallin non conforme à l'invention, basé essentiellement sur l'acide téréphtalique et le 1,6-hexanediol (comme dans les exemples de réalisation du brevet européen 521.992), donnent des revêtements qui sont très brillants (brillance de 84-86%). En outre, les revêtements obtenus à partir de ces compositions présentent une résistance au choc et une flexibilité qui sont moins bonnes.

On voit également que lorsque dans la composition on utilise un composé polyépoxydé comme agent de réticulation et que la quantité de polyester semi-cristallin augmente (de 15 à 25% en poids) et la quantité de polyester amorphe diminue (de 85 à 75% en poids par rapport au poids total des polyesters), on passe d'une brillance de 44% à une brillance de 18% (comparer les exemples 10 et 3).

On peut donc produire un revêtement ayant le niveau de brillance voulu, soit un revêtement mat (exemples 3 à 9), soit un revêtement satiné ou semi-brillant (exemples 10 et 11), rien qu'en choisissant opportunément la composition en poudre qui fournit ce niveau de brillance.

Exemples 16 et 17 et exemples comparatifs IV à VI - Préparation de compositions de revêtement thermodurcissables en poudre.

Dans ces exemples et exemples comparatifs, on prépare 5 compositions thermodurcissables en poudre selon le mode opératoire décrit dans les exemples précédents 3 à 15, en vue d'obtenir des peintures brunes foncées et de tester les propriétés des revêtements obtenus.

Les différentes compositions et les propriétés des revêtements obtenus sont décrites au tableau II ci-dessous.

Les revêtements durcis obtenus à partir de ces compositions présentent tous un aspect lisse, uniforme et sans défauts.

Tableau II

| Exemples de peintures brunes foncées. | | | | | |
|---|---|---|---|---|---|
| Composition (parties en poids) | 16 | 17 | IV (1) | V (1) | VI (1) |
| Polyester amorphe | | | | | |
| de l'exemple 1.a. | - | 635,6 | - | 635,6 | 747,7 |
| de l'exemple 1.b. | 598,2 | - | 598,2 | - | - |
| Polyester semi-cristallin | | | | | |
| de l'exemple 2.a. | - | 112,2 | - | - | - |
| de l'exemple 2.b. | 149,5 | - | - | - | - |
| de l'exemple 2.e. (1) | - | - | 149,5 | 112,2 | - |
| Agent de réticulation A (2) | 56,3 | 56,3 | 56,3 | 56,3 | 56,3 |
| Oxyde de fer noir (3) | 45 | 45 | 45 | 45 | 45 |
| Oxyde de fer noir (4) | 140 | 140 | 140 | 140 | 140 |
| Noir de carbone (5) | 11 | 11 | 11 | 11 | 11 |
| Agent régulateur de fluidité (6) | 10 | 10 | 10 | 10 | 10 |
| Benzoïne | 3,5 | 3,5 | 3,5 | 3,5 | 3,5 |
| Propriétés | | | | | |
| Brillance (60°) | 32 | 44 | 85 | 90 | 87 |
| Résistance au choc (kg.cm) | | | | | |
| direct | 100 | 180 | 120 | 60 | 0 |
| inverse | 100 | 200 | 120 | 40 | 0 |
| Dureté au crayon | H | 2H | H | 2H | 2H |

(1) à titre comparatif

(2) isocyanurate de triglycidyle (Araldite PT 810 de Ciba-Geigy)

(3) Bayferrox 130 (BAYER)

(4) Bayferrox 3950 (BAYER)

(5) FW 2 (DEGUSSA)

(6) Resiflow PV5 (Worlée Chemie)

Le tableau II montre que les compositions conformes à l'invention (exemples 16 et 17) donnent des revêtements de faible brillant, alors que les compositions non conformes à l'invention (exemples comparatifs IV et V) qui contiennent un polyester semi-cristallin basé essentiellement sur l'acide téréphtalique et le 1,6-hexanediol, donnent des revêtements très brillants (brillance de 85 à 90%).

Exemple 18 - Résistance aux intempéries des revêtements.

Dans cet exemple, on met en évidence l'excellent comportement vis-à-vis des intempéries des revêtements de faible brillant obtenus à partir des compositions conformes à l'invention.

Dans ce but, on a testé les revêtements obtenus avec les peintures brunes foncées préparées dans les exemples 16 et 17 et les exemples comparatifs IV, V et VI (dont les compositions sont données au tableau II) quant à leur résistance aux intempéries.

Les peintures en poudre à tester sont déposées par projection à l'aide d'un pistolet pulvérisateur électrostatique Gema-Volstatic PCG 1 sur des panneaux en aluminium chromé sous une tension de 60 à 100 kV. L'épaisseur du dépôt formé est de 50 à 70 micromètres.

On soumet les revêtements obtenus après une cuisson de 15 minutes à 200°C, au test de vieillissement accéléré (test QUV décrit plus haut) afin d'évaluer la résistance aux rayons UV et à l'humidité. On a déterminé le changement de teinte delta E selon la norme ASTM D 2244 et la rétention de la brillance, mesurée sous un angle de 60°C, selon la norme ASTM D 523 après 3.000 heures d'exposition.

Les résultats ainsi obtenus sont reproduits dans le tableau III dans lequel:

| la première colonne | indique la composition testée, |
|---|---|

(suite)

| la deuxième colonne | le changement de teinte delta E calculé selon la norme ASTM D 2244 après 3.000 heures d'exposition, |
|---|---|
| la troisième colonne | la rétention de la brillance, mesurée sous un angle de 60°C, selon la norme ASTM D 523 après 3.000 heures d'exposition, et exprimée en pour cent de sa valeur initiale au début de l'expérience. |

Tableau III

| Vieillissement accéléré des revêtements. | | |
|---|---|---|
| Composition | Delta E | Rétention de la brillance (%) |
| de l'exemple 16 | 5,3 | 63 |
| de l'exemple 17 | 3,5 | 82 |
| de l'exemple IV (1) | 16,8 | 32 |
| de l'exemple V (1) | 15,1 | 41 |
| de l'exemple VI (1) | 4,8 | 92 |

(1) à titre comparatif.

Les résultats du tableau III montrent que les revêtements de faible brillant obtenus au départ des compositions conformes à l'invention présentent une résistance remarquable aux intempéries (exemples 16 et 17).

Cette résistance aux intempéries est comparable à celle obtenue avec les compositions à base de polyesters amorphes riches en acide isophtalique, disponibles dans le commerce et réputés pour leur excellente performance en exposition à l'extérieur (exemple comparatif VI). La présence du polyester semi-cristallin basé sur l'acide 1,12-dodécanedioïque et le 1,6-hexanediol dans les compositions conforme à l'invention n'affecte guère la résistance aux intempéries des revêtements durcis obtenus.

On voit au tableau III qu'il n'en est pas de même en ce qui concerne les compositions de l'état de la technique qui contiennent un polyester semi-cristallin du type de ceux utilisés dans les exemples de réalisation du brevet européen 521.992, basés essentiellement sur l'acide téréphtalique et le 1,6-hexanediol. En effet, les revêtements obtenus avec ces compositions sont fortement endommagées par l'exposition à des lampes UV et à l'humidité; le changement de teinte delta E est très considérable et la brillance chute en dessous de 50% de sa valeur initiale après 3.000 heures d'exposition (exemples comparatifs IV et V).

**Revendications**

1.    Compositions de revêtement thermodurcissables en poudre comprenant comme liant un mélange d'un polyester amorphe, d'un polyester semi-cristallin et d'un agent de réticulation **caractérisées en ce que** le liant comprend

(a) un polyester amorphe contenant des groupes carboxyle, riche en acide isophtalique, préparé à partir d'un constituant acide comprenant de 55 à 100 moles % d'acide isophtalique, de 0 à 45 moles % d'au moins un acide dicarboxylique autre que l'acide isophtalique et de 0 à 10 moles % d'un acide polycarboxylique contenant au moins 3 groupes carboxyle et d'un constituant alcoolique comprenant de 60 à 100 moles % de néopentylglycol, de 0 à 40 moles % d'au moins un composé dihydroxylé autre que le néopentylglycol et de 0 à 10 moles % d'un composé polyhydroxylé contenant au moins 3 groupes hydroxyle, ledit polyester amorphe ayant une température de transition vitreuse (Tg) d'au moins 50°C et un indice d'acide de 15 à 100 mg de KOH/g,
(b) un polyester semi-cristallin contenant des groupes carboxyle préparé soit

(b1) à partir d'un acide dicarboxylique aliphatique saturé à chaîne linéaire ayant de 4 à 16 atomes de carbone et d'un diol aliphatique saturé à chaîne linéaire ayant de 2 à 16 atomes de carbone et éventuellement d'un acide polycarboxylique contenant au moins 3 groupes carboxyle ou d'un polyol contenant au moins 3 groupes hydroxyle, soit
(b2) à partir de 40 à 100 moles % d'un acide dicarboxylique aliphatique saturé à chaîne linéaire choisi parmi l'acide 1,11-undécanedioïque, l'acide 1,12-dodécanedioïque, l'acide 1,13-tridécanedioïque, l'acide 1.15-pentadécanedioïque et l'acide 1,16-hexadécanedioïque et de 0 à 60 moles % d'un acide dicarboxylique aliphatique à chaîne linéaire ayant de 4 à 9 atomes de carbone, calculé sur le total des acides dicarboxyliques, d'un diol cycloaliphatique ayant de 3 à 16 atomes de carbones et éventuellement d'un acide polycarboxylique ayant au moins 3 groupes carboxyle ou d'un polyol ayant au moins 3 groupes hydroxyle, <u>soit</u>

<u>(b3) à partir de 40 à 100 moles % d'acide 1,14-tétradécanedioïque et de 0 à 60 moles % d'un acide dicarboxylique aliphatique à chaîne linéaire ayant de 4 à 9 atomes de carbone, calculé sur le total des acides dicarboxyliques, de cyclohexanediméthanol et éventuellement d'un acide polycarboxylique ayant au moins 3 groupes carboxyle ou d'un polyol ayant au moins 3 groupes hydroxyle,</u>

lesdits polyesters semi-cristallins ayant un point de fusion (Tm) d'au moins 40°C et un indice d'acide de 5 à 50 mg de KOH/g, et

(c) un agent de réticulation

2. Compositions selon la revendication 1, **caractérisées en ce que** le polyester amorphe (a) présente une température de transition vitreuse de 50 à 80°C et un indice d'acide de 30 à 70 mg de KOH par gramme.

3. Compositions selon rune quelconque des revendications 1 et 2, **caractérisées en ce que** le polyester amorphe (a) présente au moins l'une des caractéristiques suivantes: un poids moléculaire moyen en nombre compris entre 1.100 et 11.500 et une viscosité à l'état fondu de 100 à 15.000 mPa.s à 200°C.

4. Compositions selon l'une quelconque des revendications 1 à 3, **caractérisées en ce que** le constituant acide du polyester amorphe (a) contient, outre l'acide isophtalique, jusqu'à 45 moles% d'un acide dicarboxylique choisi parmi l'acide téréphtalique, l'acide phtalique, l'acide succinique, l'acide glutarique, l'acide adipique, l'acide pimélique, l'acide subérique, l'acide azélaïque, l'acide sébacique, l'acide fumarique, l'acide maléique, l'acide 1,3-cyclohexanedicarboxylique, l'acide 1,4-cyclohexanedicarboxylique et les mélanges de ces composés,

5. Compositions selon l'une quelconque des revendications 1 à 4, **caractérisées en ce que** le constituant alcoolique du polyester amorphe (a) contient, outre le néopentylglycol, jusqu'à 40 moles % d'un composé dihydroxylé choisi parmi l'éthylène glycol, le propylène glycol, le 1,4-butanediol, le 1,6-hexanediol, le 2-méthyl-1,3-propanediol, le 2-butyl-2-éthyl-1,3-propanediol, le 1,4-cyclohexanediméthanol le bisphénol A hydrogéné, l'hydroxypivalate de néopentylglycol et les mélanges de ces composés.

6. Compositions selon l'une quelconque des revendications 1 à 5, **caractérisées en ce que** le polyester semi-cristallin (b) présente un point de fusion compris entre 40 et 90°C, un indice d'acide de 5 à 30 mg de KOH par gramme, et un indice d'hydroxyle qui ne dépasse pas 5 mg de KOH par gramme.

7. Compositions selon l'une quelconque des revendications 1 à 6, **caractérisées en ce que** le polyester semi-cristallin (b) présente au moins l'une des caractéristiques suivantes: un poids moléculaire moyen en nombre compris entre 2.200 et 25.000 et une viscosité à l'état fondu ayant une valeur minimale de 50 mPa.s à 100°C et qui ne dépasse pas 10.000 mPa.s à 150°C.

8. Compositions selon l'une quelconque des revendications 1 à 7, **caractérisées en ce que** le polyester semi-cristallin (b1) est le produit de polyestérification de l'acide 1,12-dodécanedioïque avec le 1,6-hexanediol.

9. Compositions selon l'une quelconque des revendications 1 à 7, **caractérisées en ce que** le polyester semi-cristallin (b2) est le produit de polyestérification de l'acide 1,12-dodécanedioïque avec le 1,4-cyclohexanediol, ou le 1,4-cyclohexanediméthanol.

10. Compositions selon l'une quelconque des revendications 1 à 9, **caractérisées en ce que** la quantité de polyester amorphe (a) représente environ 60 à 87% en poids et la quantité de polyester semi-cristallin (b) représente environ 13 à 40% en poids calculée par rapport au poids total des polyesters amorphe (a) et semi-cristallin (b).

11. Compositions selon l'une quelconque des revendications 1 à 9, **caractérisées en ce que** la quantité de polyester amorphe représente 60 à 82% en poids et la quantité de polyester semi-cristallin (b) représente 18 à 40% en poids calculée par rapport au poids total des polyesters amorphe (a) et semi-cristallin (b).

12. Compositions selon l'une quelconque des revendications 1 à 11, **caractérisées en ce que** l'agent de réticulation (c) estun composé polyépoxydé.

**13.** Compositions selon l'une quelconque des revendications 1 à 11, **caractérisées en ce que** l'agent de réticulation (c) est un bêta-hydroxyalkylamide.

**14.** Compositions selon l'une quelconque des revendications 1 à 13, **caractérisées en ce que** le rapport de quantité entre les polyesters amorphe (a) et semi-cristallin (b) contenant des groupes carboxyle, d'une part et l'agent de réticulation (c), d'autre part, est tel qu'il y a de 0.5 à 1.5 équivalent de groupes carboxyle par équivalent de groupes fonctionnels dans ragent de réticulation.

**15.** Compositions selon l'une quelconque des revendications 1 à 14, **caractérisées en ce que** l'agent de réticulation (c) est présent en une quantité d'environ 4 à 25% en poids calculée par rapport au poids total du liant.

**16.** Compositions selon l'une quelconque des revendications 1 à 15, **caractérisées en ce que** le liant comprend de 45 à 83% en poids de polyester amorphe (a), de 13 à 30% en poids de polyester semi-cristallin (b) et de 4 à 25% en poids d'agent de réticulation (c).

**17.** Compositions selon l'une quelconque des revendications 1 à 15, **caractérisées en ce que** le liant comprend de 45 à 78% en poids de polyester amorphe (a), de 18 à 30% en poids de polyester semi-cristallin (b) et 4 à 25% en poids d'agent de réticulation (c).

**18.** Vernis et peintures obtenus avec les compositions thermodurcissables en poudre selon l'une quelconque des revendications 1 à 17.

**19.** Procédé d'obtention d'un revêtement de faible brillant sur un article, **caractérisé en ce qu'**on applique sur ledit article une composition de revêtement thermodurcissable en poudre selon l'une quelconque des revendications 1 à 17 et **en ce qu'**on fait subir à l'article ainsi revêtu une cuisson à une température de 140 à 200°C pendant une durée pouvant atteindre 30 minutes.

**20.** Revêtements satinés et mats obtenus à partir des compositions thermodurcissables en poudre selon l'une quelconque des revendications 1 à 17.

**21.** Articles revêtus entièrement ou partiellement par le procédé selon la revendication 19.

**Patentansprüche**

**1.** Pulverförmige wärmehärtbare Beschichtungszusammensetzungen, die als Bindemittel ein Gemisch eines amorphen Polyesters, eines semikristallinen Polyesters und eines Vernetzungsmittels umfassen, **dadurch gekennzeichnet, dass** das Bindemittel umfasst

(a) einen an Isophthalsäure reichen amorphen Polyester mit Carboxylgruppen, hergestellt aus einem Säurebestandteil, der 55 bis 100 Mol-% Isophthalsäure, 0 bis 45 Mol-% wenigstens einer von Isophthalsäure verschiedenen Dicarbonsäure und 0 bis 10 Mol-% einer Polycarbonsäure mit wenigstens 3 Carboxylgruppen umfasst, und einem Alkoholbestandteil, der 60 bis 100 Mol-% Neopentylglykol, 0 bis 40 Mol-% wenigstens einer von Neopentylglykol verschiedenen Dihydroxylverbindung und 0 bis 10 Mol-% einer Polyhydroxylverbindung mit wenigstens 3 Hydroxylgruppen umfasst, wobei besagter amorpher Polyester eine Glasübergangstemperatur (Tg) von wenigstens 50 °C und eine Säurezahl von 15 bis 100 mg KOH/g hat,
(b) einen semikristallinen Polyester mit Carboxylgruppen, hergestellt entweder

(b1) aus einer gesättigten aliphatischen Dicarbonsäure mit linearer Kette mit 4 bis 16 Kohlenstoffatomen und einem gesättigten aliphatischen Diol mit linearer Kette mit 2 bis 16 Kohlenstoffatomen und gegebenenfalls einer Polycarbonsäure mit wenigstens 3 Carboxylgruppen oder einem Polyol mit wenigstens 3 Hydroxylgruppen oder
(b2) aus 40 bis 100 Mol-% einer gesättigten aliphatischen Dicarbonsäure mit linearer Kette, ausgewählt unter 1,11-Undecandisäure, 1,12-Dodecandisäure, 1,13-Tridecandisäure, 1,15-Pentadecandisäure und 1,16-Hexadecandisäure, und 0 bis 60 Mol-% einer aliphatischen Dicarbonsäure mit linearer Kette mit 4 bis 9 Kohlenstoffatomen, berechnet auf die Gesamtheit der Dicarbonsäuren, einem cycloaliphatischen Diol mit 3 bis 16 Kohlenstoffatomen und gegebenenfalls einer Polycarbonsäure mit wenigstens 3 Carboxylgruppen oder einem Polyol mit wenigstens 3 Hydroxylgruppen oder

(b3) aus 40 bis 100 Mol-% 1,14-Tetradecandisäure und 0 bis 60 Mol-% einer aliphatischen Dicarbonsäure mit linearer Kette mit 4 bis 9 Kohlenstoffatomen, berechnet auf die Gesamtheit der Dicarbonsäuren, Cyclohexandimethanol und gegebenenfalls einer Polycarbonsäure mit wenigstens 3 Carboxylgruppen oder einem Polyol mit wenigstens 3 Hydroxylgruppen,

wobei besagte semikristalline Polyester einen Schmelzpunkt (Tm) von wenigstens 40 °C und eine Säurezahl von 5 bis 50 mg KOH/g haben, und
(c) ein Vernetzungsmittel.

2. Zusammensetzungen gemäß Anspruch 1, **dadurch gekennzeichnet, dass** der amorphe Polyester (a) eine Glasübergangstemperatur von 50 bis 80 °C und eine Säurezahl von 30 bis 70 mg KOH pro Gramm aufweist.

3. Zusammensetzungen gemäß einem der Ansprüche 1 und 2, **dadurch gekennzeichnet, dass** der amorphe Polyester (a) wenigstens eines der folgenden Merkmale aufweist: ein Zahlenmittel des Molekulargewichts zwischen 1.100 und 11.500 und eine Viskosität in der Schmelze von 100 bis 15.000 mPa·s bei 200 °C.

4. Zusammensetzungen gemäß einem der Ansprüche 1 bis 3, **dadurch gekennzeichnet, dass** der Säurebestandteil des amorphen Polyesters (a) außer Isophthalsäure bis zu 45 Mol-% einer Dicarbonsäure enthält, die ausgewählt ist unter Terephthalsäure, Phthalsäure, Bernsteinsäure, Glutarsäure, Adipinsäure, Pimelinsäure, Korksäure, Azelainsäure, Sebacinsäure, Fumarsäure, Maleinsäure, 1,3-Cyclohexandicarbonsäure, 1,4-Cyclohexandicarbonsäure und den Gemischen dieser Verbindungen.

5. Zusammensetzungen gemäß einem der Ansprüche 1 bis 4, **dadurch gekennzeichnet, dass** der Alkoholbestandteil des amorphen Polyesters (a) außer Neopentylglykol bis zu 40 Mol-% einer Dihydroxylverbindung enthält, die ausgewählt ist unter Ethylenglykol, Propylenglykol, 1,4-Butandiol, 1,6-Hexandiol, 2-Methyl-1,3-propandiol, 2-Butyl-2-ethyl-1,3-propandiol, 1,4-Cyclohexandimethanol, hydriertem Bisphenol A, Hydroxypivalinsäure-Neopentylglykolester und den Gemischen dieser Verbindungen.

6. Zusammensetzungen gemäß einem der Ansprüche 1 bis 5, **dadurch gekennzeichnet, dass** der semikristalline Polyester (b) einen Schmelzpunkt zwischen 40 und 90 °C, eine Säurezahl von 5 bis 30 mg KOH pro Gramm und eine Hydroxylzahl aufweist, die 5 mg KOH pro Gramm nicht übersteigt.

7. Zusammensetzungen gemäß einem der Ansprüche 1 bis 6, **dadurch gekennzeichnet, dass** der semikristalline Polyester (b) wenigstens eines der folgenden Merkmale aufweist: ein Zahlenmittel des Molekulargewichts zwischen 2.200 und 25.000 und eine Viskosität in der Schmelze, die einen minimalen Wert von 50 mPa·s bei 100 °C hat und die 10.000 mPa·s bei 150 °C nicht übersteigt.

8. Zusammensetzungen gemäß einem der Ansprüche 1 bis 7, **dadurch gekennzeichnet, dass** der semikristalline Polyester (b1) das Polyveresterungsprodukt von 1,12-Dodecandisäure mit 1,6-Hexandiol ist.

9. Zusammensetzungen gemäß einem der Ansprüche 1 bis 7, **dadurch gekennzeichnet, dass** der semikristalline Polyester (b2) das Polyveresterungsprodukt von 1,12-Dodecandisäure mit 1,4-Cyclohexandiol oder 1,4-Cyclohexandimethanol ist.

10. Zusammensetzungen gemäß einem der Ansprüche 1 bis 9, **dadurch gekennzeichnet, dass** die Menge an amorphem Polyester (a) etwa 60 bis 87 Gew.-% darstellt und die Menge an semikristallinem Polyester (b) etwa 13 bis 40 Gew.-% darstellt, berechnet in Bezug auf das Gesamtgewicht des amorphen Polyesters (a) und semikristallinen Polyesters (b).

11. Zusammensetzungen gemäß einem der Ansprüche 1 bis 9, **dadurch gekennzeichnet, dass** die Menge an amorphem Polyester 60 bis 82 Gew.-% darstellt und die Menge an semikristallinem Polyester (b) 18 bis 40 Gew.-% darstellt, berechnet in Bezug auf das Gesamtgewicht des amorphen Polyesters (a) und semikristallinen Polyesters (b).

12. Zusammensetzungen gemäß einem der Ansprüche 1 bis 11, **dadurch gekennzeichnet, dass** das Vernetzungsmittel (c) eine Polyepoxidverbindung ist.

13. Zusammensetzungen gemäß einem der Ansprüche 1 bis 11, **dadurch gekennzeichnet, dass** das Vernetzungsmittel (c) ein beta-Hydroxyalkylamid ist.

14. Zusammensetzungen gemäß einem der Ansprüche 1 bis 13, **dadurch gekennzeichnet, dass** das Mengenverhältnis zwischen dem amorphen Polyester (a) und semikristallinen Polyester (b) mit Carboxylgruppen einerseits und dem Vernetzungsmittel (c) andererseits so ist, dass 0,5 bis 1,5 Äquivalente Carboxylgruppen pro Äquivalent funktionelle Gruppen in dem Vernetzungsmittel vorliegen.

15. Zusammensetzungen gemäß einem der Ansprüche 1 bis 14, **dadurch gekennzeichnet, dass** das Vernetzungsmittel (c) in einer Menge von etwa 4 bis 25 Gew.-%, berechnet in Bezug auf das Gesamtgewicht des Bindemittels, vorhanden ist.

16. Zusammensetzungen gemäß einem der Ansprüche 1 bis 15, **dadurch gekennzeichnet, dass** das Bindemittel 45 bis 83 Gew.-% amorphen Polyester (a), 13 bis 30 Gew.-% semikristallinen Polyester (b) und 4 bis 25 Gew.-% Vernetzungsmittel (c) umfasst.

17. Zusammensetzungen gemäß einem der Ansprüche 1 bis 15, **dadurch gekennzeichnet, dass** das Bindemittel 45 bis 78 Gew.-% amorphen Polyester (a), 18 bis 30 Gew.-% semikristallinen Polyester (b) und 4 bis 25 Gew.-% Vernetzungsmittel (c) umfasst.

18. Lacke und Farben, die mit den pulverförmigen wärmehärtbaren Zusammensetzungen gemäß einem der Ansprüche 1 bis 17 erhalten werden.

19. Verfahren zum Erhalt einer Beschichtung mit schwachem Glanz auf einem Gegenstand, **dadurch gekennzeichnet, dass** man auf besagten Gegenstand eine pulverförmige wärmehärtbare Beschichtungszusammensetzung gemäß einem der Ansprüche 1 bis 17 aufbringt und man den so beschichteten Gegenstand bei einer Temperatur von 140 bis 200 °C über eine Dauer, die 30 Minuten erreichen kann, härtet.

20. Seidenmatte und matte Beschichtungen, die aus den pulverförmigen wärmehärtbaren Zusammensetzungen gemäß einem der Ansprüche 1 bis 17 erhalten werden.

21. Ganz oder teilweise durch das Verfahren gemäß Anspruch 19 beschichtete Gegenstände.


**Claims**

1. Thermosetting powder coating compositions containing as binder a mixture of an amorphous polyester, a semi-crystalline polyester and a crosslinking agent, **characterised in that** the binder comprises

   a) an amorphous polyester containing carboxyl groups, rich in isophthalic acid, prepared from an acid component comprising 55 to 100 mole % of isophthalic acid, 0 to 45 mole % of at least one dicarboxylic acid other than isophthalic acid and 0 to 10 mole % of a polycarboxylic acid containing at least 3 carboxyl groups, and an alcohol component comprising 60 to 100 mole % of neopentyl glycol, 0 to 40 mole % of at least one dihydroxy compound other than neopentyl glycol and 0 to 10 mole % of a polyhydroxy compound containing at least 3 hydroxyl groups, the said amorphous polyester having a glass transition temperature (Tg) of at least 50°C and an acid value of 15 to 100 mg KOH/g,

   b) a semi-crystalline polyester containing carboxyl groups prepared either

   b1) from a linear-chain saturated aliphatic dicarboxylic acid having 4 to 16 carbon atoms and a linear-chain saturated aliphatic diol having 2 to 16 carbon atoms and optionally a polycarboxylic acid containing at least 3 carboxyl groups or a polyol containing at least 3 hydroxyl groups, or

   b2) from 40 to 100 mole % of a linear-chain saturated aliphatic dicarboxylic acid selected from among 1,11-undecanedioic acid, 1,12-dodecanedioic acid, 1,13-tridecanedioic acid, 1,15-pentadecanedioic acid and 1,16-hexadecanedioic acid, and 0 to 60 mole % of a linear-chain aliphatic dicarboxylic acid having 4 to 9 carbon atoms, calculated on the total dicarboxylic acids, a cycloaliphatic diol having 3 to 16 carbon atoms and optionally a polycarboxylic acid having at least 3 carboxyl groups or a polyol having at least 3 hydroxyl groups, or

b3) from 40 to 100 mole % of 1,14-tetradecanedioic acid and 0 to 60 mole % of a linear-chain aliphatic dicarboxylic acid having 4 to 9 carbon atoms, calculated on the total dicarboxylic acids, cyclohexanedimethanol and optionally a polycarboxylic acid having at least 3 carboxyl groups or a polyol having at least 3 hydroxyl groups,

said semi-crystalline polyesters having a melting point (Tm) of at least 40°C and an acid value of 5 to 50 mg KOH/g, and

c) a crosslinking agent.

2. Compositions according to claim 1, **characterised in that** the amorphous polyester (a) has a glass transition temperature of 50 to 80°C and an acid value of 30 to 70 mg KOH per gram.

3. Compositions according to any one of claims 1 and 2, **characterised in that** the amorphous polyester (a) has at least one of the following characteristics: a number-average molecular weight of 1,100 to 11,500 and a melt viscosity of 100 to 15,000 mPa.s at 200°C.

4. Compositions according to any one of claims 1 to 3, **characterised in that** the acid component of the amorphous polyester (a) contains, in addition to isophthalic acid, up to 45 mole % of a dicarboxylic acid selected from among terephthalic acid, phthalic acid, succinic acid, glutaric acid, adipic acid, pimelic acid, suberic acid, azelaic acid, sebacic acid, fumaric acid, maleic acid, 1,3-cyclohexanedicarboxylic acid, 1,4-cyclohexanedicarboxylic acid and mixtures of these compounds.

5. Compositions according to any one of claims 1 to 4, **characterised in that** the alcohol component of the amorphous polyester (a) contains, in addition to neopentyl glycol, up to 40 mole % of a dihydroxy compound selected from among ethylene glycol, propylene glycol, 1,4-butanediol, 1,6-hexanediol, 2-methyl-1,3-propanediol, 2-butyl-2-ethyl-1,3-propanediol, 1,4-cyclohexanedimethanol, hydrogenated bisphenol A, neopentyl glycol hydroxypivalate and mixtures of these compounds.

6. Compositions according to any one of claims 1 to 5, **characterised in that** the semi-crystalline polyester (b) has a melting point of 40 to 90°C, an acid value of 5 to 30 mg KOH per gram and a hydroxyl number not exceeding 5 mg KOH per gram.

7. Compositions according to any one of claims 1 to 6, **characterised in that** the semi-crystalline polyester (b) has at least one of the following characteristics: a number-average molecular weight of 2,200 to 25,000 and a melt viscosity having a minimum value of 50 mPa.s at 100°C and not exceeding 10,000 mPa.s at 150°C.

8. Compositions according to any one of claims 1 to 7, **characterised in that** the semi-crystalline polyester (b1) is the polyesterification product of 1,12-dodecanedioic acid with 1,6-hexanediol.

9. Compositions according to any one of claims 1 to 7, **characterised in that** the semi-crystalline polyester (b2) is the polyesterification product of 1,12-dodecanedioic acid with 1,4-cyclohexanediol or 1,4-cyclohexanedimethanol.

10. Compositions according to any one of claims 1 to 9, **characterised in that** the quantity of amorphous polyester (a) represents about 60 to 87 wt.% and the quantity of semi-crystalline polyester (b) represents about 13 to 40 wt. %, calculated in relation to the total weight of the amorphous polyester (a) and semi-crystalline polyester (b).

11. Compositions according to any one of claims 1 to 9, **characterised in that** the quantity of amorphous polyester represents 60 to 82 wt.% and the quantity of semi-crystalline polyester (b) represents 18 to 40 wt.%, calculated in relation to the total weight of the amorphous polyester (a) and semi-crystalline polyester (b).

12. Compositions according to any one of claims 1 to 11, **characterised in that** the crosslinking agent (c) is a polyepoxide compound.

13. Compositions according to any one of claims 1 to 11, **characterised in that** the crosslinking agent (c) is a beta-hydroxyalkylamide.

14. Compositions according to any one of claims 1 to 13, **characterised in that** the quantitative ratio between the amorphous polyester (a) and semi-crystalline polyester (b) containing carboxyl groups on the one hand and the crosslinking agent (c) on the other hand is such that there are 0.5 to 1.5 equivalents of carboxyl groups per equivalent of functional groups in the crosslinking agent.

15. Compositions according to any one of claims 1 to 14, **characterised in that** the crosslinking agent (c) is present in a quantity of about 4 to 25 wt.%, calculated in relation to the total weight of the binder.

16. Compositions according to any one of claims 1 to 15, **characterised in that** the binder comprises 45 to 83 wt.% of amorphous polyester (a), 13 to 30 wt.% of semi-crystalline polyester (b) and 4 to 25 wt.% of crosslinking agent (c).

17. Compositions according to any one of claims 1 to 15, **characterised in that** the binder comprises 45 to 78 wt.% of amorphous polyester (a), 18 to 30 wt.% of semi-crystalline polyester (b) and 4 to 25 wt.% of crosslinking agent (c).

18. Varnishes and paints obtained with the thermosetting powder compositions according to any one of claims 1 to 17.

19. Method of obtaining a low-gloss coating on an article, **characterised in that** a thermosetting powder coating composition according to any one of claims 1 to 17 is applied on to the said article and **in that** the article thus coated is subjected to curing at a temperature of 140 to 200°C for a period of up to 30 minutes.

20. Satin and matt coatings obtained from the thermosetting powder compositions according to any one of claims 1 to 17.

21. Articles coated wholly or partly by the method according to claim 19.